(19) Europäisches Patentamt / European Patent Office / Office européen des brevets

(11) **EP 3 091 534 B1**

(12) **EUROPEAN PATENT SPECIFICATION**

(45) Date of publication and mention of the grant of the patent:
**03.10.2018 Bulletin 2018/40**

(21) Application number: **14885951.5**

(22) Date of filing: **15.10.2014**

(51) Int Cl.:
*G10L 15/04* (2013.01)   *G10L 25/78* (2013.01)
*G10L 25/18* (2013.01)   *G10L 25/06* (2013.01)
*G10L 21/0308* (2013.01)

(86) International application number:
**PCT/CN2014/088654**

(87) International publication number:
**WO 2015/139452 (24.09.2015 Gazette 2015/38)**

(54) **METHOD AND APPARATUS FOR PROCESSING SPEECH SIGNAL ACCORDING TO FREQUENCY DOMAIN ENERGY**

VERFAHREN UND VORRICHTUNG ZUR VERARBEITUNG EINES SPRACHSIGNALS NACH FREQUENZBEREICHSENERGIE

PROCÉDÉ ET APPAREIL DE TRAITEMENT DE SIGNAL DE PAROLE EN FONCTION DE L'ÉNERGIE DU DOMAINE FRÉQUENTIEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.03.2014   CN 201410098869**

(43) Date of publication of application:
**09.11.2016   Bulletin 2016/45**

(73) Proprietor: **Huawei Technologies Co., Ltd.**
**Longgang District**
**Shenzhen, Guangdong 518129 (CN)**

(72) Inventor: **XU, Lijing**
**Shenzhen**
**Guangdong 518129 (CN)**

(74) Representative: **Pfenning, Meinig & Partner mbB**
**Patent- und Rechtsanwälte**
**Theresienhöhe 11a**
**80339 München (DE)**

(56) References cited:
**WO-A1-2012/061145      WO-A1-2012/146290**
**WO-A1-2013/107602      CN-A- 101 521 009**
**CN-A- 103 021 408       CN-A- 103 458 323**
**CN-A- 103 594 083       US-A- 5 450 484**
**US-A- 5 819 217         US-A1- 2006 053 003**
**US-A1- 2006 053 003     US-A1- 2012 089 393**
**US-A1- 2012 136 655**

**Description**

**TECHNICAL FIELD**

Embodiments of the present invention relate to speech signal processing technologies, and in particular, to a method and an apparatus for processing a speech signal according to frequency-domain energy.

**BACKGROUND**

When quality assessment or speech recognition is performed on a speech signal, refined segmentation usually needs to be performed on the speech signal.

In the prior art, segmentation on a speech signal is mainly to analyze a situation of a sudden change of time-domain energy in the speech signal, and perform segmentation on the speech signal according to a time change point at which the sudden change of the energy occurs; when there is no change of the energy occurs, segmentation is not performed on the speech signal.

However, when the speech signal changes, due to a characteristic of a phoneme or impact of relatively strong noise, a sudden change of time-domain energy does not necessarily occur. Therefore, a speech signal segmentation result in the prior art has low accuracy.

WO2012146290A1 discloses an audio classifier for frame based audio signal classification that includes a feature extractor configured to determine, for each of a predetermined number of consecutive frames, feature measures representing at least the following features: auto correlation (Tn), frame signal energy (En), inter- frame signal energy variation. A feature measure comparator is configured to compare each determined feature measure (Tn, En, AEn) to at least one corresponding predetermined feature interval. A frame classifier is configured to calculate, for each feature interval, a fraction measure representing the total number of corresponding feature measures that fall within the feature interval, and to classify the latest of the consecutive frames as speech if each fraction measure lies within a corresponding fraction interval, and as non-speech otherwise.

US2006053003A1 provides a harmonic structure acoustic signal detection device not depending on the level fluctuation of the input signal, having an excellent real time property and noise resistance. The device includes: an FFT unit which performs FFT on an input signal and calculates a power spectrum component for each frame; a harmonic structure extraction unit which leaves only a harmonic structure from the power spectrum component; a voiced feature evaluation unit which evaluates correlation between the frames of harmonic structures extracted by the harmonic structure extraction unit, thereby evaluates whether or not the segment is a vowel segment, and extracts the voiced segment; and a speech segment determination unit which determines a speech segment according to the continuity and durability of the output of the voiced feature evaluation unit.

**SUMMARY**

Embodiments of the present invention provide a method and an apparatus for processing a speech signal according to frequency-domain energy according to the independent claims, so as to resolve a problem that a speech signal segmentation result has low accuracy due to a characteristic of a phoneme of a speech signal or severe impact of noise when refined segmentation is performed on the speech signal.

According to a first aspect, the present invention provides a method for processing a speech signal according to claims 1-8.

According to a second aspect, the present invention provides an apparatus for processing a speech signal according to claims 9-14. In this way, segmentation is performed by using the energy distributions of the speech signal in the frequency domain, thereby improving accuracy in segmenting the speech signal.

**BRIEF DESCRIPTION OF DRAWINGS**

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

FIG. 1 is a flowchart of a method for processing a speech signal according to frequency-domain energy according to Embodiment 1 of the present invention;

FIG. 2 is a flowchart of a method for processing a speech signal according to frequency-domain energy according to Embodiment 2 of the present invention;

FIG. 3 is a schematic diagram of an English female voice and white noise sequence according to Embodiment 2 of the present invention;

FIG. 4 is a schematic diagram of frequency-domain energy distribution curves of the 68th frame to the 73rd frame of an English female voice and white noise sequence according to Embodiment 2 of the present invention;

FIG. 5 is a schematic diagram of derivatives of frequency-domain energy distribution curves of the 68th frame to the 73rd frame of an English female voice and white noise sequence according to Embodiment 2 of the present invention;

FIG. 6 is a schematic diagram of correlation coefficients between frames of an English female voice and white noise sequence according to Embodiment 2 of the present invention;

FIG. 7 is a schematic diagram of adjusted correlation coefficients between frames of an English female voice and white noise sequence according to Embodiment 2 of the present invention;

FIG. 8 is a flowchart of segmenting a speech signal according to a correlation between adjacent frames according to Embodiment 2 of the present invention;

FIG. 9 is a schematic diagram of performing speech signal segmentation on a Chinese female voice and pink noise sequence according to Embodiment 3 of the present invention;

FIG. 10 is a schematic diagram of applying speech signal segmentation performed on a Chinese female voice and pink noise sequence to speech quality assessment;

FIG. 11 is a schematic diagram of applying speech signal segmentation performed on a Chinese female voice and pink noise sequence to speech recognition;

FIG. 12 is a schematic structural diagram of an apparatus for processing a speech signal according to frequency-domain energy according to Embodiment 4 of the present invention; and

FIG. 13 is a schematic structural diagram of an apparatus for processing a speech signal according to frequency-domain energy according to Embodiment 5 of the present invention.

## DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention.

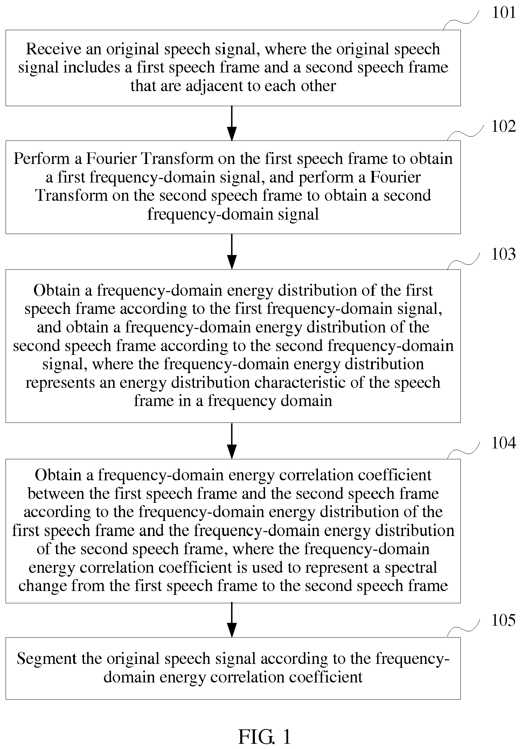

FIG. 1 is a flowchart of a method for processing a speech signal according to frequency-domain energy according to Embodiment 1 of the present invention. As shown in FIG. 1, a process of the method for processing a speech signal according to frequency-domain energy provided by this embodiment includes:

Step 101: Receive an original speech signal, where the original speech signal includes a first speech frame and a second speech frame that are adjacent to each other.

After being received, the original speech signal is converted into a continuous speech frame format for ease of subsequent processing. Therefore, when the original speech signal is processed, descriptions may be provided by using any two adjacent speech frames as an example, and a process of processing all speech frames of the speech signal is similar to a process of processing the two adjacent speech frames of the speech signal. For convenience, the adjacent speech frames are defined as the first speech frame and the second speech frame.

Step 102: Perform a Fourier Transform on the first speech frame to obtain a first frequency-domain signal, and perform a Fourier Transform on the second speech frame to obtain a second frequency-domain signal.

A fast Fourier Transformation (Fast Fourier Transformation, FFT for short) may be performed on current frame data, to convert a time-domain signal into a frequency-domain signal. After the Fourier Transform is performed on the first speech frame, the first frequency-domain signal is obtained, and after the Fourier Transform is performed on the second speech frame, the second frequency-domain signal is obtained.

Step 103: Obtain a frequency-domain energy distribution of the first speech frame according to the first frequency-domain signal, and obtain a frequency-domain energy distribution of the second speech frame according to the second frequency-domain signal, where the frequency-domain energy distribution represents an energy distribution characteristic of the speech frame in a frequency domain.

Specifically, the obtaining a frequency-domain energy distribution of the first speech frame according to the first frequency-domain signal includes:

with at least two frequency bands included in a frequency range of the first speech frame, obtaining a first ratio of total energy within any one of the frequency ranges of the first speech frame to total energy of the first speech frame according to a real part of the first frequency-domain signal and an imaginary part of the first frequency-domain signal; and

performing derivation on the first ratio to obtain a first derivative that represents the frequency-domain energy distribution of the first speech frame.

The obtaining a first ratio of total energy within any one of the frequency ranges of the first speech frame to total energy of the first speech frame according to a real part of the first frequency-domain signal and an imaginary part of the first frequency-domain signal specifically includes:

obtaining the first ratio according to
$$ratio\_energy_k(f) = \frac{\sum_{i=0}^{f}(\mathrm{Re\_}fft^2(i) + \mathrm{Im\_}fft^2(i))}{\sum_{i=0}^{(F_{\lim}-1)}(\mathrm{Re\_}fft^2(i) + \mathrm{Im\_}fft^2(i))} \times 100\%,$$

$f \in [0,(F_{\lim}-1)]$, where

$ratio\_energy_k(f)$ represents the first ratio of the total energy within any one of the frequency ranges of the first speech frame to the total energy of the first speech frame, a value of $i$ is within $0\sim f$, $f$ represents a quantity of spectral lines, $f \in [0,(F_{\lim}-1)]$, $(F_{\lim}-1)$ represents a maximum value of the quantity of the spectral lines of the first speech frame, $\mathrm{Re\_}fft(i)$ represents the real part of the first frequency-domain signal, $\mathrm{Im\_}ffl(i)$ represents the imaginary part of the first frequency-domain signal, $\sum_{i=0}^{(F_{\lim}-1)}(\mathrm{Re\_}fft^2(i) + \mathrm{Im\_}fft^2(i))$ represents the total energy of the first speech frame, and $\sum_{i=0}^{f}(\mathrm{Re\_}fft^2(i) + \mathrm{Im\_}fft^2(i))$ represents total energy within a frequency range $0\sim f$ of the

first speech frame.

The derivation may be performed by using multiple methods, for example, a numerical differentiation algorithm, that is, an approximation of a derivative or a higher order derivative of a function at a point is calculated according to function values of the function at some discrete points. Generally, numerical differentiation may be performed by means of polynomial interpolation. Methods for the polynomial interpolation include Lagrange (lagrange) interpolation, Newton (Newton) interpolation, Hermite (Hermite) interpolation, and the like, and are not enumerated one by one herein.

Herein, the performing derivation on the first ratio is specifically:

performing the derivation on the first ratio according to

$$ratio\_energy'_k(f) = \left(\sum_{n=0}^{N}\left(\left(\prod_{\substack{i=0 \\ i \neq n}}^{N}\frac{f-M-i}{n-i}\right) * ratio\_energy_k(n+M)\right)\right)' \text{ where}$$

N represents that the foregoing numerical differentiation is N points; and M represents that the foregoing numerical differentiation is obtained by using a first ratio within a range $f \in [M,(M+N-1)]$.

Step 104: Obtain a frequency-domain energy correlation coefficient between the first speech frame and the second speech frame according to the frequency-domain energy distribution of the first speech frame and the frequency-domain energy distribution of the second speech frame, where the frequency-domain energy correlation coefficient is used to represent a spectral change from the first speech frame to the second speech frame.

Specifically, the frequency-domain energy correlation coefficient between the first speech frame and the second speech frame is determined according to the first derivative within the frequency range of the first speech frame, a second derivative, and a product of the first derivative and the second derivative, where the second derivative represents the frequency-domain energy distribution of the second speech frame.

Specifically, after the obtaining a frequency-domain energy correlation coefficient between the first speech frame and the second speech frame according to the frequency-domain energy distribution of the first speech frame and the frequency-domain energy distribution of the second speech frame, the method further includes:

determining a local maximum point of the frequency-domain energy correlation coefficient;
grouping the original speech signal by using the local maximum point as a grouping point; and
performing normalization processing on each group obtained by grouping, and calculating a corrected frequency-domain energy correlation coefficient according to the frequency-domain energy correlation coefficient and a result of the normalization processing; and

correspondingly, segmenting the original speech signal according to the frequency-domain energy correlation coefficient includes:

segmenting the original speech signal according to the corrected frequency-domain energy correlation coefficient.

The calculating a corrected frequency-domain energy correlation coefficient according to the frequency-domain energy correlation coefficient and a result of the normalization processing specifically includes:

calculating the corrected frequency-domain energy correlation coefficient according to a formula

$$r_k^{'} = r_k + (1 - \max(r_{k1}))$$

, where $r_k^{'}$ is the calculated corrected frequency-domain energy correlation coefficient, $r_k$ is the frequency-domain energy correlation coefficient, $r_{k1}$ is a frequency-domain energy correlation coefficient of a local maximum point of each group after the grouping, and $\max(r_{k1})$ is a maximum frequency-domain energy correlation coefficient of the local maximum point of each group after the grouping.

The correlation coefficient may also be calculated by using multiple methods, for example, a Pearson (Pearson) product-moment correlation coefficient algorithm.

The correlation coefficient can sensitively reflect a spectral change situation of the speech signal. Generally, when a spectrum status of a speech signal spectrum is increasingly steady, the correlation coefficient approaches closer to 1; and when the speech signal spectrum changes obviously, for example, undergoes a transition from a syllable to another syllable, the correlation coefficient decreases rapidly within a short time.

Step 105: Segment the original speech signal according to the frequency-domain energy correlation coefficient.

Specifically, the segmenting the original speech signal according to the frequency-domain energy correlation coefficient includes:

determining a local minimum point of the frequency-domain energy correlation coefficient; and

if the local minimum point is less than or equal to a set threshold, segmenting the speech signal by using the local minimum point as a segmentation point.

It can be learned according to the above-described characteristic of the correlation coefficient that, if a value of the correlation coefficient is less than a threshold, for example: the threshold is 0.8, that is, if the correlation coefficient is less than 0.8, it indicates that a spectral position of the speech signal has changed obviously, and segmentation may be performed at a corresponding position; and segmentation does not need to be performed at a position where the correlation coefficient is greater than or equal to 0.8.

After the segmenting the original speech signal according to the frequency-domain energy correlation coefficient, the method further includes:

calculating an average value of time-domain energy within a set time-domain range that uses each segmentation point in the original speech signal as a center; and

if the calculated corresponding average value within the set time-domain range that uses each segmentation point as the center is less than or equal to a set value, merging two segments involved by corresponding segmentation points.

In this embodiment, an original speech signal including a first speech frame and a second speech frame that are adjacent to each other is received; then, a Fourier Transform is performed on the first speech frame and the second speech frame separately to obtain a first frequency-domain signal and a second frequency-domain signal; then, a frequency-domain energy distribution of the first speech frame and a frequency-domain energy distribution of the second speech frame are obtained accordingly, where the frequency-domain energy distribution is used to represent an energy distribution characteristic of the speech frame in a frequency domain; according to the frequency-domain energy distribution of the first speech frame and the frequency-domain energy distribution of the second speech frame, a frequency-domain energy correlation coefficient that is between the first speech frame and the second speech frame and that is used to represent a spectral change from the first speech frame to the second speech frame is obtained; and finally, the original speech signal is segmented according to the frequency-domain energy correlation coefficient. In this way, the segmentation is performed by using the frequency-domain energy distribution of the speech signal, thereby improving accuracy in segmenting the speech signal.

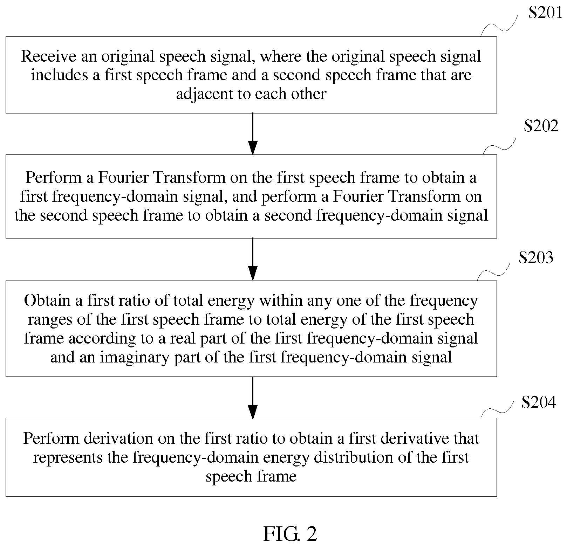

FIG. 2 is a flowchart of a method for processing a speech signal according to frequency-domain energy according to Embodiment 2 of the present invention. As shown in FIG. 2, based on the illustration in FIG. 1, this embodiment provides in detail detailed steps in a processing process of segmenting a speech signal according to frequency-domain energy.

Steps of calculating an energy distribution characteristic of a speech frame in a frequency domain specifically include:

S201. Receive an original speech signal, where the original speech signal includes a first speech frame and a second speech frame that are adjacent to each other.

After the original speech signal is received, the speech signal may be filtered in step S201. For example, 50 Hz high-pass filtering may be performed to remove a direct-current component in the speech signal, to enable the signal to reach a relatively ideal signal status.

After being received, the original speech signal is converted into a continuous speech frame format for ease of subsequent processing. Therefore, when the original speech signal is processed, descriptions may be provided by using any two adjacent speech frames as an example, and a process of processing all speech frames of the speech signal is similar to a process of processing the two adjacent speech frames of the speech signal. For convenience, the adjacent speech frames are defined as the first speech frame and the second speech frame.

S202. Perform a Fourier Transform on the first speech frame to obtain a first frequency-domain signal, and perform a Fourier Transform on the second speech frame to obtain a second frequency-domain signal.

Specifically, because the current speech signal is a time-domain signal, an FFT transform may be performed on the speech signal, to convert the speech signal into a frequency-domain signal. A Fourier Transform, for example a fast Fourier Transformation FFT, may be performed on current frame data of the speech signal by setting a sampling rate of the speech signal to 8KHz, where a size F of the fast Fourier Transformation FFT may be 1024. In this way, after the Fourier Transform is performed on the first speech frame and the second speech frame, the first frequency-domain signal and the second frequency-domain signal may be obtained.

S203. Obtain a first ratio of total energy within any one of the frequency ranges of the first speech frame to total energy of the first speech frame according to a real part of the first frequency-domain signal and an imaginary part of the first frequency-domain signal.

A frequency range of the first speech frame includes at least two frequency bands. When the total energy within any one of the frequency ranges of the first speech frame is calculated, calculation may be performed according to a quantity of spectral lines within any one of the frequency ranges, where the quantity of the spectral lines is related to the size F of the fast Fourier Transformation FFT.

It can be understood that, a value of the quantity of spectral lines may also be assigned in another manner capable of being implemented by persons of ordinary skill in the art, and the foregoing example is only an example intended to help understand this embodiment of the present invention, and shall not be construed as a limitation to this embodiment of the present invention.

Obtaining a first ratio of total energy of the first speech frame within a frequency range $0 \sim f$ to the total energy of the first speech frame according to the real part of the first frequency-domain signal and the imaginary part of the first frequency-domain signal specifically includes:

obtaining the first ratio according to $ratio\_energy_k(f) = \dfrac{\sum\limits_{i=0}^{f}(\mathrm{Re}\_fft^2(i) + \mathrm{Im}\_fft^2(i))}{\sum\limits_{i=0}^{(F_{\lim}-1)}(\mathrm{Re}\_fft^2(i) + \mathrm{Im}\_fft^2(i))} \times 100\%$,

$f \in [0(F_{\lim}-1)]$, where

$ratio\_energy_k(f)$ represents the first ratio of the total energy within any one of the frequency ranges of the first speech frame to the total energy of the first speech frame, a value of $i$ is within $0 \sim f$, $f$ represents a quantity of spectral lines, $f \in [0,(F_{\lim}-1)]$, $(F_{\lim}-1)$ represents a maximum value of the quantity of the spectral lines of the first speech frame, $\mathrm{Re}\_fft(i)$ represents the real part of the first frequency-domain signal, $\mathrm{Im}\_fft(i)$ represents the imaginary part of the first frequency-domain signal, $\sum\limits_{i=0}^{(F_{\lim}-1)}(\mathrm{Re}\_fft^2(i) + \mathrm{Im}\_fft^2(i))$ represents the total energy of the first speech frame, and $\sum\limits_{i=0}^{f}(\mathrm{Re}\_fft^2(i) + \mathrm{Im}\_fft^2(i))$ represents total energy within a frequency range $0 \sim f$ of the

first speech frame.

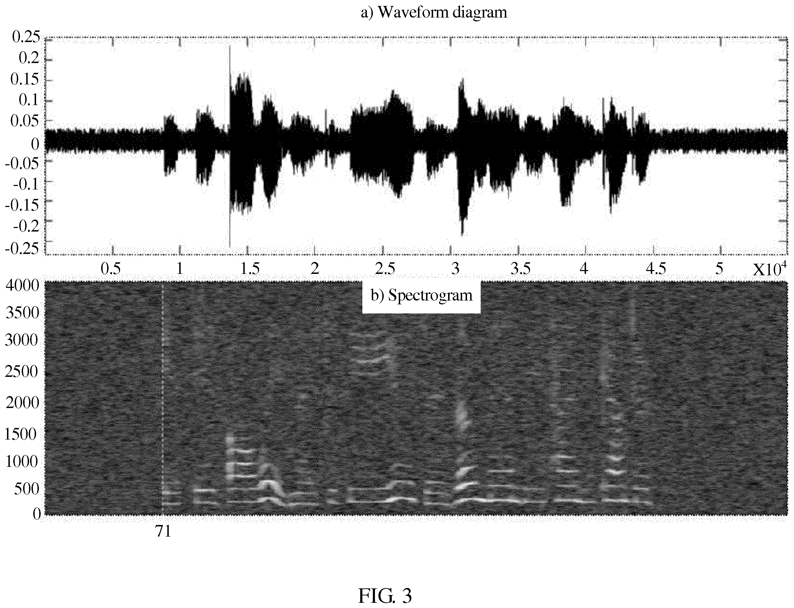

Specifically, descriptions may be provided by using an example of an English female voice and white noise sequence shown in FIG. 3. In FIG. 3, a) is a waveform diagram, a horizontal axis represents sample points, and a vertical axis represents normalized amplitude, b) is a spectrogram, a horizontal axis represents frame numbers, and in a time domain, the frame numbers are corresponding to the sample points in FIG. a; a vertical axis represents frequency. The 71st frame marked by a thin white dotted line in b) is a start frame of a speech signal.

It can be seen from FIG. 3:

(1) There is no tonal component in a white noise portion, before the speech signal, in the spectrogram, and energy is evenly distributed in an entire bandwidth range.

(2) In a start portion of the speech signal in the spectrogram, there are two obvious tonal components from 0 to 500 Hz (including 0 Hz and 500 Hz). Energy is no longer evenly distributed in the entire bandwidth range; instead, the energy is concentrated in two frequency bands in which the tonal components are located.

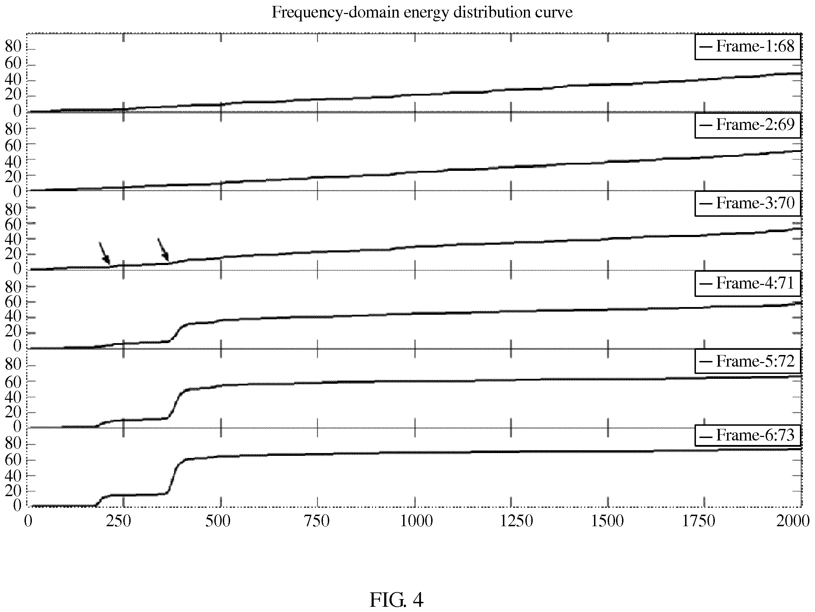

For the sequence given in FIG. 3, six sub-diagrams of FIG. 4 from top to bottom provide frequency-domain energy distributions of the 68th frame to the 73rd frame respectively. A horizontal axis of each sub-diagram represents frequency. For ease of display, only frequency-domain energy distributions from 0 to 2000 Hz(including 0 Hz and 2000 Hz) are displayed. A vertical axis of each sub-diagram represents a percentage value ranging from 0 to 100%(including 0 and 100%). A frequency-domain energy distribution of a specific frame has an arrow for indicating a portion at which the frequency-domain energy distribution changes.

It can be seen from FIG. 4:

(1) The 68th frame and the 69th frame are a white noise segment. When the energy is evenly distributed in the entire bandwidth range, a curve that represents the frequency-domain energy distribution is substantially a straight line.

(2) The 70th frame is a transition segment between white noise and the speech signal. Compared with that in the preceding two frames, the curve representing the frequency-domain energy distribution in the 70th frame fluctuates slightly at positions indicated by two arrows, which indicates that a frequency-domain energy distribution situation of the current frame starts changing.

(3) The 71st frame to the 73rd frame are a speech segment, and there are two obvious tonal components in a frequency range of 0 to 500 Hz(including 0 Hz and 500 Hz). The curve that represents the frequency-domain energy distribution is no longer a straight line; instead, there are increasingly obvious fluctuations in the frequency bands in which the tonal components are located.

It can be seen from FIG. 3 and FIG. 4 that, when the speech signal changes, the frequency-domain energy distribution of the speech signal changes at the same time, the curve that represents the frequency-domain energy distribution of the speech signal fluctuates in the frequency bands in which the tonal components of the speech signal are located, and therefore, a change of the frequency-domain energy distribution can faithfully reflect a change situation of the speech signal. Therefore, a change situation of the speech signal can be obtained according to a change situation of the frequency-domain energy distributions of the first speech frame and the second speech frame that are adjacent to each other.

The change situation of the speech signal may be obtained by analyzing a correlation between adjacent frames in the speech signal, and when analyzing a frequency-domain energy distribution, a change situation of the frequency-domain energy distribution can be inferred by calculating an energy distribution characteristic, which changes with the frequency, of each frame.

S204. Perform derivation on the first ratio to obtain a first derivative that represents the frequency-domain energy distribution of the first speech frame.

The performing derivation on the first ratio is specifically:

performing the derivation on the first ratio according to

$$ratio\_energy'_k(f) = \left( \sum_{n=0}^{N} \left( \left( \prod_{\substack{i=0 \\ i \neq n}}^{N} \frac{f-M-i}{n-i} \right) * ratio\_energy_k(n+M) \right) \right)' \text{ where}$$

N represents that the foregoing numerical differentiation is N points; and M represents that the foregoing numerical differentiation is obtained by using a first ratio within a range $f \in [M,(M+N\text{-}1)]$.

Based on the energy distribution characteristic, which changes with the frequency and is calculated in the foregoing step, of each frame, derivation may be performed on the ratio of the total energy within any one of the frequency ranges of the first speech frame to the total energy of the first speech frame and on a ratio of total energy within any one of frequency ranges of the second speech frame to total energy of the second speech frame, to obtain the energy distribution characteristic, which changes with the frequency, of each frame. Derivatives of the ratios may be calculated by using multiple methods such as a numerical differentiation method. Specifically, when the derivatives of the first ratio and the second ratio are calculated by using the numerical differentiation method, specific calculation may be performed by means of Lagrange (Lagrange) interpolation.

When a Lagrange seven-point numerical differentiation formula is used,

$$ratio\_energy'_k(f) = -\frac{1}{60}ratio\_energy_k(f-3) + \frac{9}{60}ratio\_energy_k(f-2) - \frac{45}{60}ratio\_energy_k(f-1)$$
$$+ \frac{45}{60}ratio\_energy_k(f+1) - \frac{9}{60}ratio\_energy_k(f+2) + \frac{1}{60}ratio\_energy_k(f+3),$$

$f \in [3,(F/2-4)]$ is used to perform derivation on the ratios; and

when $f \in [0,2]$ or $f \in [(F/2-3), (F/2-1)]$, $ratio\_energy'_k(f)$ is set to 0.

In addition, a Lagrange three-point numerical differentiation formula, a Lagrange five-point numerical differentiation formula, and the like may be used to calculate the derivatives of the ratios. When the Lagrange three-point numerical differentiation formula is used,

$$ratio\_energy'_k(f) = -\frac{1}{2}ratio\_energy_k(f-1) + \frac{1}{2}ratio\_energy_k(f+1),$$

$f \in [1, (F/2-2)]$ is used to perform the derivation on the ratios; and

when $f=0$ or $f=(F/2-1)$, $ratio\_energy'_k(f)$ is set to 0.

When the Lagrange five-point numerical differentiation formula is used,

$$ratio\_energy'_k(f) = \frac{1}{12}ratio\_energy_k(f-2) - \frac{8}{12}ratio\_energy_k(f-1)$$
$$+ \frac{8}{12}ratio\_energy_k(f+1) - \frac{1}{12}ratio\_energy_k(f+2),$$

$f \in [2,(F/2-3)]$ is used to perform the derivation on the ratios; and

when $f \in [0,1]$ or $f \in [(F/2-2), (F/2-1)]$, $ratio\_energy'_k(f)$ is set to 0.

In addition, methods such as Newton (Newton) interpolation and Hermite (Hermite) interpolation may also be used to perform the derivation on the ratios, and details are not described herein.

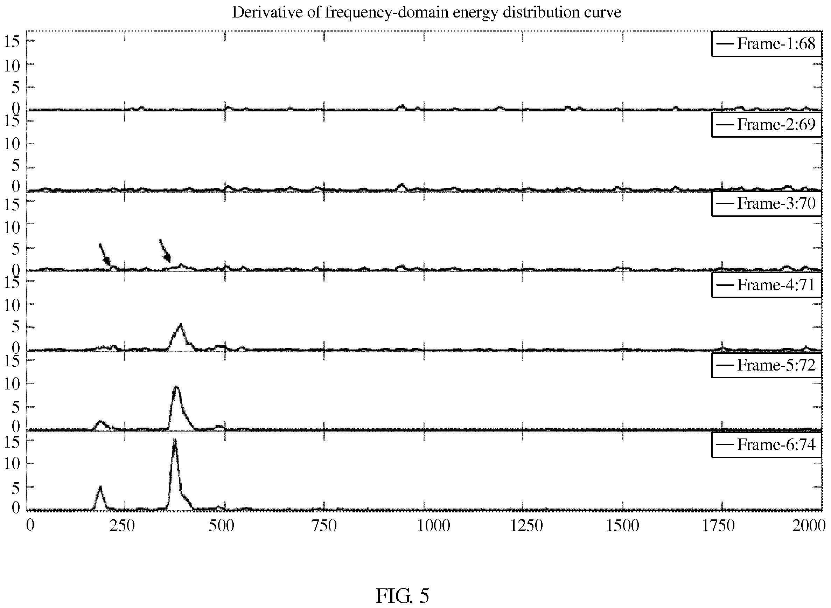

The English female voice and white noise sequence are still used as an example. Six sub-diagrams of FIG. 5 from top to bottom provide derivatives of ratios of frequency-domain energy distributions of the 68th frame to the 73rd frame respectively. A horizontal axis represents frequency, and a vertical axis represents derivative values.

It can be seen from FIG. 5:

(1) The 68th frame and the 69th frame are a white noise segment. Energy is substantially evenly distributed in an entire bandwidth range, and derivatives of the ratios of the frequency-domain energy distributions are substantially 0.
(2) The 70th frame is a transition segment between white noise and the speech signal. Compared with that in the preceding two frames, derivative values of the ratios of the frequency-domain energy distributions undergo two relatively small changes at positions indicated by two arrows, which indicates that a frequency-domain energy distribution situation of the current frame starts changing.
(3) The 71st frame to the 73rd frame are a speech segment, and there are two obvious tonal components in a frequency range of 0 to 500 Hz(including 0 Hz and 500 Hz). The derivatives of the ratios of the frequency-domain energy distributions have two peaks at frequencies corresponding to the two tonal components.

It can be seen from FIG. 5 that, when the speech signal changes, derivative values of the ratios of the frequency-domain energy distributions of the speech signal change within frequency bands in which the tonal components of the speech signal are located, and therefore the energy distribution characteristic, which changes with the frequency, of each frame can be obtained by performing derivation on the ratios.

The correlation between adjacent frames may be determined according to the energy distribution characteristic, which changes with the frequency, of each frame, for example, a correlation coefficient between adjacent frames may be calculated according to a derivation result. For example, a frequency-domain energy correlation coefficient between the first speech frame and the second speech frame may be obtained according to the frequency-domain energy distribution of the first speech frame and the frequency-domain energy distribution of the second speech frame. Specifically, the frequency-domain energy correlation coefficient between the first speech frame and the second speech frame may be determined according to the first derivative within the frequency range of the first speech frame, a second derivative, and a product of the first derivative and the second derivative, where the second derivative represents the frequency-domain energy distribution of the second speech frame.

The correlation coefficient may be calculated by using multiple methods. In the following example, the correlation coefficient is calculated by using Pearson product-moment. It is assumed that the current frame is the $k^{th}$ frame, and a specific formula for calculating the correlation coefficient $r_k$ is:

$$r_k = \frac{\frac{F}{2} \cdot sum_{xy}(k) - sum_x(k-1) \cdot sum_x(k)}{\sqrt{\frac{F}{2} \cdot sum_{xx}(k-1) - (sum_x(k-1))^2} \cdot \sqrt{\frac{F}{2} \cdot sum_{xx}(k) - (sum_x(k))^2}},$$

$k \geq 1$ in the formula, F is the size of the fast Fourier Transformation FFT,

$$sum_x(i) = \sum_{f=0}^{(F/2-1)} ratio\_energy_i'(f),$$

$$sum_{xx}(i) = \sum_{f=0}^{(F/2-1)} ratio\_energy_i'(f)^2,$$ and

$$sum_{xy}(i) = \sum_{f=0}^{(F/2-1)} [ratio\_energy_{i-1}'(f) \cdot ratio\_energy_i'(f)].$$

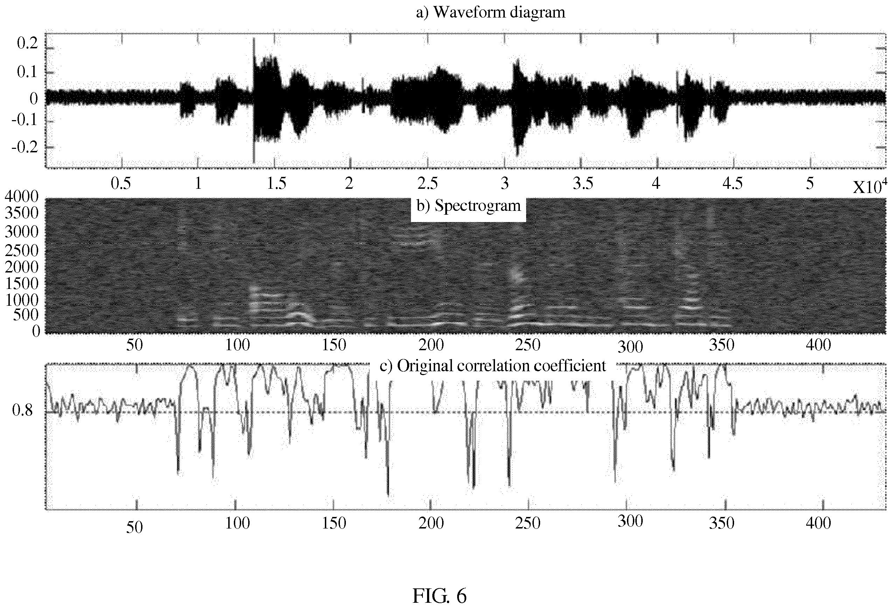

Descriptions are provided by still using the English female voice and white noise sequence as an example. FIG. 6 is a schematic diagram of correlation coefficients between frames of the English female voice and white noise sequence, a) is a waveform diagram; b) is a spectrogram; and c) is a correlation coefficient. A horizontal axis represents frame numbers, a vertical axis represents correlation coefficients, and a dotted line is set as a baseline at a horizontal axis with a value of the correlation coefficient being 0.8.

It can be seen from FIG. 6:

(1) There is no tonal component in a white noise portion, before the speech signal, in the spectrogram, energy is evenly distributed in an entire bandwidth range, and in this case, the correlation coefficient is a curve that fluctuates within a small range at the dotted line of 0.8.

(2) In a start portion of the speech signal in the spectrogram, there are two obvious tonal components from 0 to 500 Hz(including 0 Hz and 500 Hz). In this case, the correlation coefficient fluctuates violently at corresponding tonal components, falls dramatically to be below the dotted line of 0.8 at the beginning of a tonal component, and rises rapidly to be close to 1 at the tonal component, falls dramatically again to be below the dotted line of 0.8 at the end of the tonal component, and restores rapidly again to be above the dotted line of 0.8.

It can be seen from FIG. 6 that, the correlation coefficient can sensitively reflect a spectral change situation of the signal. Generally, when a spectrum status in the spectrogram is increasingly steady, the correlation coefficient approaches 1; and when a spectrum in the spectrogram changes obviously, for example, undergoes a transition from a syllable to another syllable, the correlation coefficient decreases rapidly within a short time. If the value of the correlation coefficient is less than a set threshold (for example, 0.8), it indicates that a signal spectrum has changed obviously, and segmentation needs to be performed herein; otherwise, segmentation does not need to be performed.

Optionally, after the correlation coefficient between adjacent frames in the speech signal is calculated according to the derivation result, because a white noise portion in the spectrogram is different from the speech signal in the spectrogram, change of the spectrum status is always kept in a state between "steady" and "obvious change", the correlation coefficient of the spectrum of the white noise portion always fluctuates within a relatively narrow range. In this case, if a value within this range is used as a threshold to perform segmentation, several inaccurate segmentation results will be obtained from the white noise portion. Therefore, the initially calculated correlation coefficient may be adjusted, to ensure the speech signal is segmented and white noise portions before and after the speech signal are not segmented. Adjustment may specifically include:

determining a local maximum point of the correlation coefficient; grouping the speech signal by using the local maximum point as a grouping point; and performing normalization processing on each group obtained by grouping, and calculating a corrected frequency-domain energy correlation coefficient according to the frequency-domain energy correlation coefficient and a result of the normalization processing, which specifically includes: calculating the corrected frequency-domain energy correlation coefficient according to a formula $r_k' = r_k + (1 - \max(r_{k1}))$, where $r_k$ is the calculated corrected frequency-domain energy correlation coefficient, $r_{k1}$ is a correlation coefficient of a local maximum point of each group after the grouping, and $\max(r_{k1})$ is a maximum correlation coefficient of the local maximum point of each group after the grouping. Correspondingly, the segmenting the original speech signal according to the frequency-domain energy correlation coefficient includes: segmenting the original speech signal according to the corrected frequency-domain energy correlation coefficient.

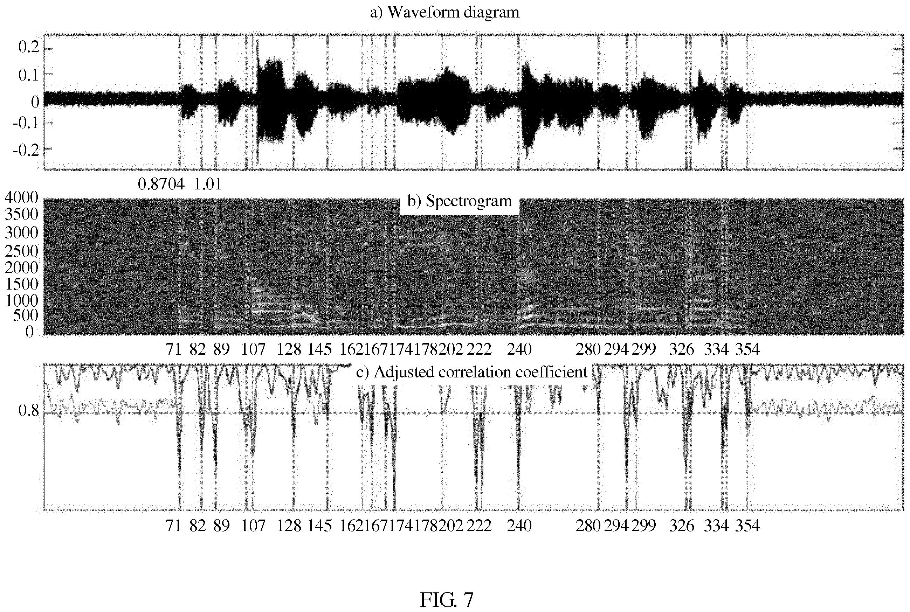

FIG. 7 is a schematic diagram of adjusted correlation coefficients between frames of the English female voice and white noise sequence. In FIG. 7, a) is a waveform diagram; b) is a spectrogram; and in c), a dotted line represents original correlation coefficients, and a solid line represents adjusted correlation coefficients. It can be seen from the figure that, adjustment is mainly for noise portions, and has little impact on a speech portion. For the adjusted correlation coefficients, segmentation is performed by using 0.8 as a threshold, and therefore, the speech signal can be accurately segmented, and the white noise portions before and after the speech signal are not segmented incorrectly.

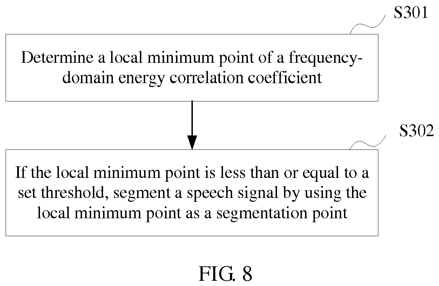

Further, after a correlation between adjacent frames is obtained, the speech signal is segmented according to the correlation between adjacent frames. As shown in FIG. 8, the step of segmenting the original speech signal according to the frequency-domain energy correlation coefficient specifically includes:

S301. Determine a local minimum point of the frequency-domain energy correlation coefficient.

S302. If the local minimum point is less than or equal to a set threshold, segment the speech signal by using the local minimum point as a segmentation point.

Specifically, the set threshold for segmentation may be set according to a specific use requirement. If the segmentation is a phoneme division algorithm for speech recognition, refined segmentation needs to be performed on the speech signal, and the set threshold may be set relatively large; and if the segmentation is a speech segmentation algorithm for speech quality assessment, segmentation on the speech signal is relatively rough, and the set threshold may be set relatively small.

Specifically, after the segmenting the speech signal by using the local minimum point as a segmentation point, further, segmentation results may be merged, which may specifically include:

calculating an average value of time-domain energy within a set time-domain range that uses each segmentation point in the original speech signal as a center; and if the calculated corresponding average value within the set time-domain range that uses each segmentation point as the center is less than or equal to a set value, merging two segments involved by corresponding segmentation points.

Speech signal segmentation is applicable to multiple application scenarios including speech quality assessment, speech recognition, and the like.

When performing speech quality assessment, the speech signal segmentation method in this embodiment of the present invention may be combined with an existing voiced sound and noise classification algorithm to implement a segmentation algorithm for speech quality assessment.

In this embodiment, the calculating an energy distribution characteristic of a speech frame in a frequency domain specifically includes: receiving an original speech signal including a first speech frame and a second speech frame that are adjacent to each other; performing a Fourier Transform on the first speech frame and the second speech frame separately to obtain a first frequency-domain signal and a second frequency-domain signal; obtaining a first ratio of total energy of the first speech frame within a frequency range 0~$f$ to total energy of the first speech frame according to a real part and an imaginary part of the first frequency-domain signal and obtaining a second ratio of total energy of the second speech frame within the frequency range 0~$f$ to total energy of the second speech frame according to a real part and an imaginary part of the second frequency-domain signal; and finally performing derivation on the first ratio and the second ratio separately, to obtain a first derivative and a second derivative that respectively represent a frequency-domain energy distribution of the first speech frame and a frequency-domain energy distribution of the second speech frame. Then, when segmenting the speech signal according to a correlation between adjacent frames, a local minimum point of a correlation coefficient is determined first; and if the local minimum point is less than or equal to a set threshold, the speech signal is segmented by using the local minimum point as a segmentation point. In this way, the speech signal is segmented according to the frequency-domain energy distributions, thereby improving accuracy in segmenting the speech signal.

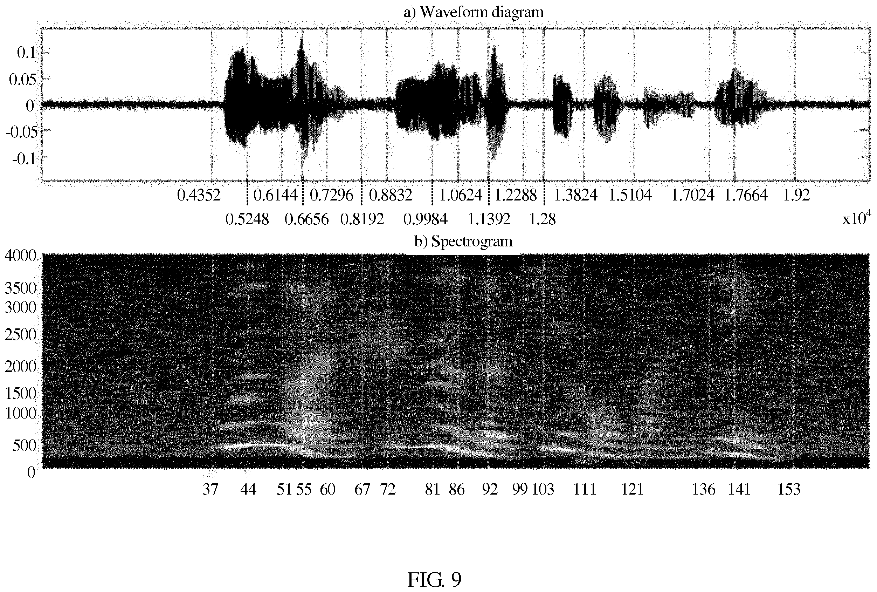

FIG. 9 is a schematic diagram of performing speech signal segmentation on a Chinese female voice and pink noise sequence according to Embodiment 3 of the present invention. As shown in FIG. 9, a speech signal segmentation method in this embodiment is similar to that in the foregoing embodiment, and details are not described herein. In addition to the foregoing embodiment, the speech signal segmentation method provided by this embodiment may also be applied to speech quality assessment or speech recognition.

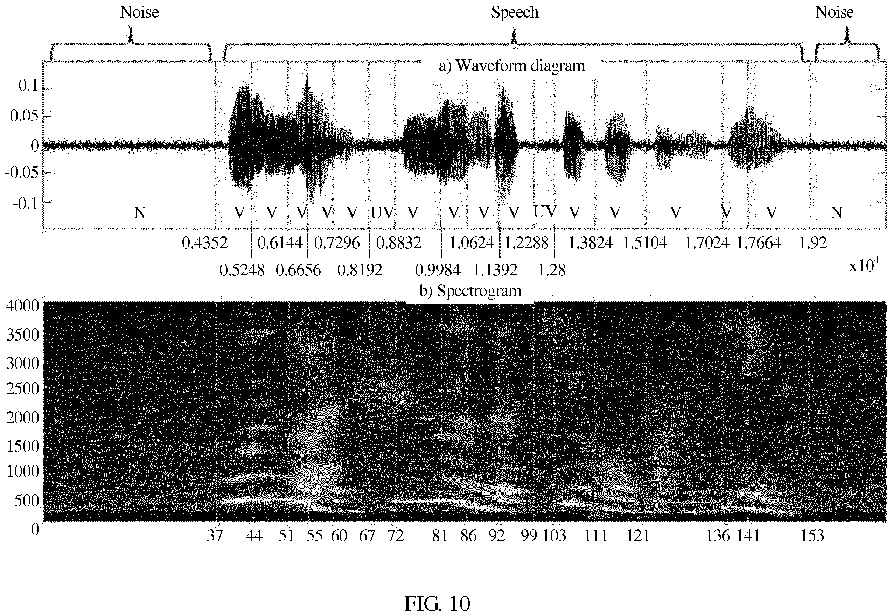

When performing speech quality assessment, for example, performing speech quality assessment on the Chinese female voice and pink noise sequence, a specific application process of the speech signal segmentation method is shown in FIG. 10, where V represents a voiced sound, UV represents an unvoiced sound, and N represents noise. In this way, it may be analyzed that each segment in refined segmentation is a voiced sound, an unvoiced sound, or noise; then, an unvoiced sound segment and a voiced sound segment are merged to form a speech segment; and a speech segment and a noise segment for scoring are obtained. Therefore, a to-be-assessed speech signal is divided into relatively long segments, to facilitate subsequent scoring for speech quality assessment.

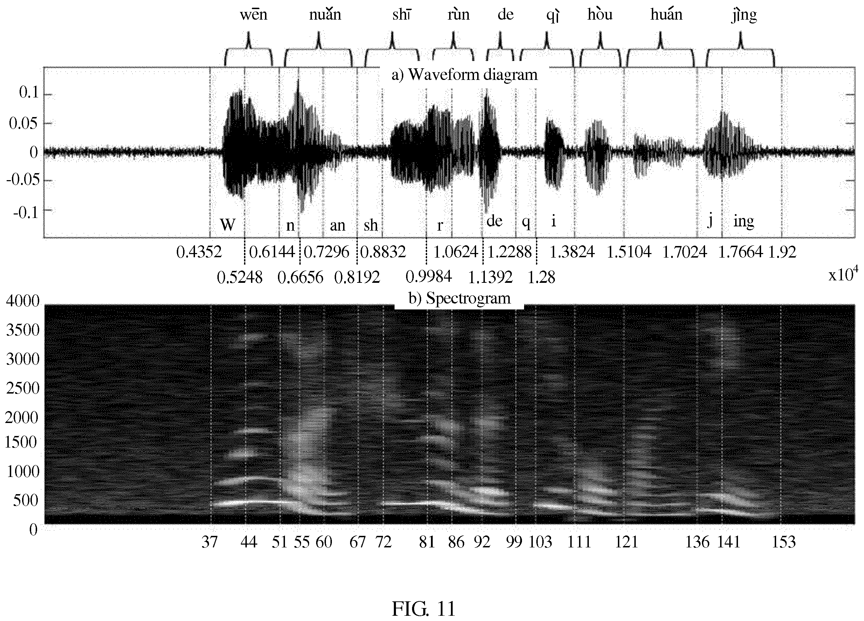

When performing speech recognition, the speech recognition is still performed on the Chinese female voice and pink noise sequence, and a specific application process of the speech signal segmentation method is shown in FIG. 11. In this embodiment, refined speech signal segmentation provided by the speech signal segmentation method can be accurate to a phoneme, and may be used to implement an automatic phoneme division algorithm for an initial phase of speech recognition. Finally, a refined speech signal segmentation result accurate to a phoneme or a syllable is obtained. Later, recognition may further be performed on words formed by phonemes or syllables according to the refined segmentation result.

In this embodiment, the speech signal segmentation method may be used to complete refined speech signal segmentation, to perform speech quality assessment; it is analyzed that each segment in the refined segmentation is a voiced sound, an unvoiced sound, or noise, and a speech segment and a noise segment for scoring are obtained; or, the speech signal segmentation method is applied to speech recognition, to obtain a refined speech signal segmentation result accurate to a phoneme or a syllable.

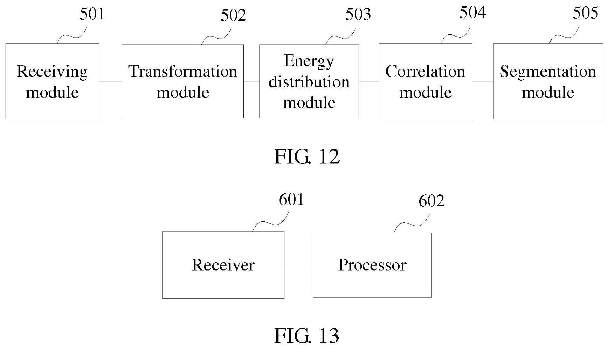

FIG. 12 is a schematic structural diagram of an apparatus for processing a speech signal according to frequency-domain energy according to Embodiment 4 of the present invention. As shown in FIG. 12, the apparatus for processing a speech signal according to frequency-domain energy includes:

a receiving module 501, configured to receive an original speech signal, where the original speech signal includes a first speech frame and a second speech frame that are adjacent to each other;

a transformation module 502, configured to perform a Fourier Transform on the first speech frame to obtain a first frequency-domain signal, and perform a Fourier Transform on the second speech frame to obtain a second frequency-domain signal;

an energy distribution module 503, configured to obtain a frequency-domain energy distribution of the first speech frame according to the first frequency-domain signal, and obtain a frequency-domain energy distribution of the second speech frame according to the second frequency-domain signal, where the frequency-domain energy distribution represents an energy distribution characteristic of the speech frame in a frequency domain;

a correlation module 504, configured to obtain a frequency-domain energy correlation coefficient between the first speech frame and the second speech frame according to the frequency-domain energy distribution of the first speech frame and the frequency-domain energy distribution of the second speech frame, where the frequency-domain energy correlation coefficient is used to represent a spectral change from the first speech frame to the second speech frame; and

a segmentation module 505, configured to segment the original speech signal according to the frequency-domain energy correlation coefficient.

Specifically, a frequency range of the first speech frame includes at least two frequency bands, and the energy distribution module 503 is configured to:

obtain a first ratio of total energy within any one of the frequency ranges of the first speech frame to total energy of the first speech frame according to a real part of the first frequency-domain signal and an imaginary part of the first frequency-domain signal; and

perform derivation on the first ratio to obtain a first derivative that represents the frequency-domain energy distribution of the first speech frame and the frequency-domain energy distribution of the second speech frame.

Further, the energy distribution module 503 is further configured to:

obtain the first ratio according to $$ratio\_energy_k(f) = \frac{\sum_{i=0}^{f}(\text{Re}\_fft^2(i) + \text{Im}\_fft^2(i))}{\sum_{i=0}^{(F_{\lim}-1)}(\text{Re}\_fft^2(i) + \text{Im}\_fft^2(i))} \times 100\%$$ $f$

$\in [0,(F_{\lim}-1)]$, where

$ratio\_energy_k(f)$ represents the first ratio of the total energy within any one of the frequency ranges of the first speech frame to the total energy of the first speech frame, a value of $i$ is within $0\sim f$, $f$ represents a quantity of spectral lines, $f \in [0,(F_{\lim}-1)]$, $(F_{\lim}-1)$ represents a maximum value of the quantity of the spectral lines of the first speech frame, Re_$fft(i)$ represents the real part of the first frequency-domain signal, Im_$fft(i)$ represents the imaginary part of the first frequency-domain signal, $\displaystyle\sum_{i=0}^{(F_{\lim}-1)} (\text{Re}\_fft^2(i) + \text{Im}\_fft^2(i))$ represents the total energy of the first

speech frame, and $\displaystyle\sum_{i=0}^{f}(\text{Re}\_fft^2(i) + \text{Im}\_fft^2(i))$ represents total energy within a frequency range $0\sim f$ of the

first speech frame.

Further, the energy distribution module 503 is further configured to:

perform the derivation on the first ratio according to

$$ratio\_energy_k'(f) = \left(\sum_{n=0}^{N}\left(\left(\prod_{\substack{i=0 \\ i \neq n}}^{N} \frac{f-M-i}{n-i}\right) * ratio\_energy_k(n+M)\right)\right)'$$ where

N represents that the foregoing numerical differentiation is N points; and M represents that the foregoing numerical differentiation is obtained by using a first ratio within a range $f \in [M,(M+N-1)]$.

Specifically, the correlation module 504 is configured to:
determine the frequency-domain energy correlation coefficient between the first speech frame and the second speech frame according to the first derivative within the frequency range of the first speech frame, a second derivative, and a product of the first derivative and the second derivative, where the second derivative represents the frequency-domain energy distribution of the second speech frame.
Further, after being configured to obtain the frequency-domain energy correlation coefficient between the first speech frame and the second speech frame according to the frequency-domain energy distribution of the first speech frame and the frequency-domain energy distribution of the second speech frame, the correlation module 504 is further configured to:

determine a local maximum point of the frequency-domain energy correlation coefficient;
group the original speech signal by using the local maximum point as a grouping point; and
perform normalization processing on each group obtained by grouping, and calculate a corrected frequency-domain energy correlation coefficient according to the frequency-domain energy correlation coefficient and a result of the normalization processing; and
correspondingly, the segmenting the original speech signal according to the frequency-domain energy correlation coefficient includes:
segmenting the original speech signal according to the corrected frequency-domain energy correlation coefficient.

Specifically, the correlation module 504 is configured to:
calculate the corrected frequency-domain energy correlation coefficient according to a formula
$$r_k' = r_k + (1 - \max(r_{k1}))$$ where $r_k'$ is the calculated corrected frequency-domain energy correlation coefficient, $r_k$ is the frequency-domain energy correlation coefficient, $r_{k1}$ is a frequency-domain energy correlation coefficient of a local maximum point of each group after the grouping, and $\max(r_{k1})$ is a maximum frequency-domain energy correlation coefficient of the local maximum point of each group after the grouping.

Further, the correlation module 504 is further configured to:

calculate the correlation coefficient $r_k$ according to

$$r_k = \frac{F_{\lim} \cdot sum_{xy}(k) - sum_x(k-1) \cdot sum_x(k)}{\sqrt{F_{\lim} \cdot sum_{xx}(k-1) - (sum_x(k-1))^2} \cdot \sqrt{F_{\lim} \cdot sum_{xx}(k) - (sum_x(k))^2}}, \quad k \geq 1 \quad \text{where}$$

$$sum_x(i) = \sum_{f=0}^{(F_{\lim}-1)} ratio\_energy'_i(f), \qquad sum_{xx}(i) = \sum_{f=0}^{(F_{\lim}-1)} ratio\_energy'_i(f)^2 \quad \text{and}$$

$$sum_{xy}(i) = \sum_{f=0}^{(F_{\lim}-1)} \left[ ratio\_energy'_{i-1}(f) \cdot ratio\_energy'_i(f) \right], \quad \text{where } k\text{-1 is the first speech frame, } k \text{ is the second}$$

speech frame, and $k$ is greater than or equal to 1.

Specifically, the segmentation module 505 is configured to:

determine a local minimum point of the frequency-domain energy correlation coefficient; and
if the local minimum point is less than or equal to a set threshold, segment the speech signal by using the local minimum point as a segmentation point.

Optionally, after being configured to segment the original speech signal according to the frequency-domain energy correlation coefficient, the segmentation module 505 is further configured to:

calculate an average value of time-domain energy within a set time-domain range that uses each segmentation point in the original speech signal as a center; and
calculate whether the corresponding average value within the set time-domain range that uses each segmentation point as the center is less than or equal to a set value, and if the corresponding average value within the set time-domain range that uses each segmentation point as the center is less than or equal to the set value, merge two segments involved by corresponding segmentation points.

In this embodiment, the apparatus for processing a speech signal according to frequency-domain energy first receives an original speech signal including a first speech frame and a second speech frame that are adjacent to each other; then, performs a Fourier Transform on the first speech frame and the second speech frame separately to obtain a first frequency-domain signal and a second frequency-domain signal; then, obtains a frequency-domain energy distribution of the first speech frame and a frequency-domain energy distribution of the second speech frame accordingly, where the frequency-domain energy distribution is used to represent an energy distribution characteristic of the speech frame in a frequency domain; according to the frequency-domain energy distribution of the first speech frame and the frequency-domain energy distribution of the second speech frame, obtains a frequency-domain energy correlation coefficient that is between the first speech frame and the second speech frame and that is used to represent a spectral change from the first speech frame to the second speech frame; and finally, segments the original speech signal according to the frequency-domain energy correlation coefficient. In this way, the segmentation is performed by using the frequency-domain energy distribution of the speech signal, thereby improving accuracy in segmenting the speech signal.

FIG. 13 is a schematic structural diagram of an apparatus for processing a speech signal according to frequency-domain energy according to Embodiment 5 of the present invention. As shown in FIG. 13, the apparatus for processing a speech signal according to frequency-domain energy includes:

a receiver 601, configured to receive an original speech signal, where the original speech signal includes a first speech frame and a second speech frame that are adjacent to each other;
a processor 602, configured to perform a Fourier Transform on the first speech frame to obtain a first frequency-domain signal, and perform a Fourier Transform on the second speech frame to obtain a second frequency-domain signal;
configured to obtain a frequency-domain energy distribution of the first speech frame according to the first frequency-domain signal, and obtain a frequency-domain energy distribution of the second speech frame according to the second frequency-domain signal, where the frequency-domain energy distribution represents an energy distribution characteristic of the speech frame in a frequency domain;
configured to obtain a frequency-domain energy correlation coefficient between the first speech frame and the second speech frame according to the frequency-domain energy distribution of the first speech frame and the frequency-domain energy distribution of the second speech frame, where the frequency-domain energy correlation coefficient is used to represent a spectral change from the first speech frame to the second speech frame; and configured to segment the original speech signal according to the frequency-domain energy correlation coefficient.

Specifically, a frequency range of the first speech frame includes at least two frequency bands, and the processor 602 is configured to:

obtain a first ratio of total energy within any one of the frequency ranges of the first speech frame to total energy of the first speech frame according to a real part of the first frequency-domain signal and an imaginary part of the first frequency-domain signal; and
perform derivation on the first ratio to obtain a first derivative that represents the frequency-domain energy distribution of the first speech frame and the frequency-domain energy distribution of the second speech frame.

Further, the processor 602 is further configured to:

obtain the first ratio according to $ratio\_energy_k(f) = \dfrac{\sum\limits_{i=0}^{f}(\mathrm{Re}\_fft^2(i) + \mathrm{Im}\_fft^2(i))}{\sum\limits_{i=0}^{(F_{\lim}-1)}(\mathrm{Re}\_fft^2(i) + \mathrm{Im}\_fft^2(i))} \times 100\%$      $f$

$\in [0,(F_{\lim}-1)]$, where
$ratio\_energy_k(f)$ represents the first ratio of the total energy within any one of the frequency ranges of the first speech frame to the total energy of the first speech frame, a value of $i$ is within $0\sim f$, $f$ represents a quantity of spectral lines, $f \in [0,(F_{\lim}-1)]$, $(F_{\lim}-1)$ represents a maximum value of the quantity of the spectral lines of the first speech frame, Re_$fft(i)$ represents the real part of the first frequency-domain signal, Im_$fft(i)$ represents the imaginary part of the first frequency-domain signal, $\sum\limits_{i=0}^{(F_{\lim}-1)}(\mathrm{Re}\_fft^2(i) + \mathrm{Im}\_fft^2(i))$ represents the total energy of the first speech frame, and $\sum\limits_{i=0}^{f}(\mathrm{Re}\_fft^2(i) + \mathrm{Im}\_fft^2(i))$ represents total energy within a frequency range $0\sim f$ of the first speech frame.

Further, the processor 602 is further configured to:

perform      the      derivation      on      the      first      ratio      according      to

$ratio\_energy_k'(f) = \left(\sum\limits_{n=0}^{N}\left(\left(\prod\limits_{\substack{i=0 \\ i \neq n}}^{N}\dfrac{f-M-i}{n-i}\right) * ratio\_energy_k(n+M)\right)\right)'$      where

N represents that the foregoing numerical differentiation is N points; and M represents that the foregoing numerical differentiation is obtained by using a first ratio within a range $f \in [M,(M+N-1)]$.

Specifically, the processor 602 is configured to:
determine the frequency-domain energy correlation coefficient between the first speech frame and the second speech frame according to the first derivative within the frequency range of the first speech frame, a second derivative, and a product of the first derivative and the second derivative, where the second derivative represents the frequency-domain energy distribution of the second speech frame.
Specifically, the processor 602 is configured to:
calculate    the    corrected    frequency-domain    energy    correlation    coefficient    according    to    a    formula
$r_k' = r_k + (1 - \max(r_{k1}))$, where $r_k'$ is the calculated corrected frequency-domain energy correlation coefficient, $r_k$ is the frequency-domain energy correlation coefficient, $r_{k1}$ is a frequency-domain energy correlation coefficient of a local maximum point of each group after the grouping, and max($r_{k1}$) is a maximum frequency-domain energy correlation coefficient of the local maximum point of each group after the grouping.

Further, after being configured to obtain the frequency-domain energy correlation coefficient between the first speech frame and the second speech frame according to the frequency-domain energy distribution of the first speech frame and the frequency-domain energy distribution of the second speech frame, the processor 602 is further configured to:

determine a local maximum point of the frequency-domain energy correlation coefficient;
group the original speech signal by using the local maximum point as a grouping point; and
perform normalization processing on each group obtained by grouping, and calculate a corrected frequency-domain energy correlation coefficient according to the frequency-domain energy correlation coefficient and a result of the normalization processing; and
correspondingly, the segmenting the original speech signal according to the frequency-domain energy correlation coefficient includes:
segmenting the original speech signal according to the corrected frequency-domain energy correlation coefficient.

Further, the processor 602 is further configured to:
calculate the correlation coefficient $r_k$ according to

$$r_k = \frac{F_{\lim} \cdot sum_{xy}(k) - sum_x(k-1) \cdot sum_x(k)}{\sqrt{F_{\lim} \cdot sum_{xx}(k-1) - (sum_x(k-1))^2} \cdot \sqrt{F_{\lim} \cdot sum_{xx}(k) - (sum_x(k))^2}}, \quad k \geq 1 \qquad \text{where}$$

$$sum_x(i) = \sum_{f=0}^{(F_{\lim}-1)} ratio\_energy'_i(f) \qquad sum_{xx}(i) = \sum_{f=0}^{(F_{\lim}-1)} ratio\_energy'_i(f)^2 \qquad \text{and}$$

$$sum_{xy}(i) = \sum_{f=0}^{(F_{\lim}-1)} [ratio\_energy'_{i-1}(f) \cdot ratio\_energy'_i(f)] \qquad \text{where } k\text{-1 is the first speech frame, } k \text{ is the second}$$

speech frame, and $k$ is greater than or equal to 1.

Specifically, the processor 602 is configured to:

determine a local minimum point of the frequency-domain energy correlation coefficient; and
if the local minimum point is less than or equal to a set threshold, segment the speech signal by using the local minimum point as a segmentation point.

Optionally, after being configured to segment the original speech signal according to the frequency-domain energy correlation coefficient, the processor 602 is further configured to:

calculate an average value of time-domain energy within a set time-domain range that uses each segmentation point in the original speech signal as a center; and
if the calculated corresponding average value within the set time-domain range that uses each segmentation point as the center is less than or equal to a set value, merging two segments involved by corresponding segmentation points.

In this embodiment, a receiver in the apparatus for processing a speech signal according to frequency-domain energy first receives an original speech signal including a first speech frame and a second speech frame that are adjacent to each other; then, a processor performs a Fourier Transform on the first speech frame and the second speech frame separately to obtain a first frequency-domain signal and a second frequency-domain signal; then, obtains a frequency-domain energy distribution of the first speech frame and a frequency-domain energy distribution of the second speech frame accordingly, where the frequency-domain energy distribution is used to represent an energy distribution characteristic of the speech frame in a frequency domain; according to the frequency-domain energy distribution of the first speech frame and the frequency-domain energy distribution of the second speech frame, obtains a frequency-domain energy correlation coefficient that is between the first speech frame and the second speech frame and that is used to represent a spectral change from the first speech frame to the second speech frame; and finally, segments the original speech signal according to the frequency-domain energy correlation coefficient. In this way, the segmentation is performed by using the frequency-domain energy distribution of the speech signal, thereby improving accuracy in segmenting the speech signal.

A person of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

**Claims**

1. A method for processing a speech signal according to frequency-domain energy, wherein the method comprises:

   receiving (101) an original speech signal, wherein the original speech signal comprises a first speech frame and a second speech frame that are adjacent to each other;
   performing (102) a Fourier Transform on the first speech frame to obtain a first frequency-domain signal, and performing a Fourier Transform on the second speech frame to obtain a second frequency-domain signal;
   obtaining (103) a frequency-domain energy distribution of the first speech frame according to the first frequency-domain signal, and obtaining a frequency-domain energy distribution of the second speech frame according to the second frequency-domain signal, wherein the frequency-domain energy distribution represents an energy distribution characteristic of the speech frame in a frequency domain;
   obtaining (104) a frequency-domain energy correlation coefficient between the first speech frame and the second speech frame according to the frequency-domain energy distribution of the first speech frame and the frequency-domain energy distribution of the second speech frame, wherein the frequency-domain energy correlation coefficient is used to represent a spectral change from the first speech frame to the second speech frame; and
   segmenting (105) the original speech signal according to the frequency-domain energy correlation coefficient;
   wherein a frequency range of the first speech frame comprises at least two frequency bands, wherein the obtaining a frequency-domain energy distribution of the first speech frame according to the first frequency-domain signal specifically comprises: obtaining (S203) a first ratio of total energy within any one of the frequency bands of the first speech frame to total energy of the first speech frame according to a real part of the first frequency-domain signal and an imaginary part of the first frequency-domain signal; and wherein a frequency range of the second speech frame comprises at least two frequency bands, wherein the obtaining a frequency-domain energy distribution of the second speech frame according to the second frequency-domain signal specifically comprises: obtaining a second ratio of total energy within any one of the frequency bands of the second speech frame to total energy of the second speech frame according to a real part of the second frequency-domain signal and an imaginary part of the second frequency-domain signal; and
   performing (S204) derivation on the first ratio to obtain a first derivative that represents the frequency-domain energy distribution of the first speech frame; and performing derivation on the second ratio to obtain a second derivative that represents the frequency-domain energy distribution of the second speech frame;
   wherein the obtaining a frequency-domain energy correlation coefficient between the first speech frame and the second speech frame according to the frequency-domain energy distribution of the first speech frame and the frequency-domain energy distribution of the second speech frame specifically comprises:
   determining the frequency-domain energy correlation coefficient between the first speech frame and the second speech frame according to the first derivative within the frequency range of the first speech frame, the second derivative, and a product of the first derivative and the second derivative.

2. The method according to claim 1, wherein after the obtaining a frequency-domain energy correlation coefficient between the first speech frame and the second speech frame according to the frequency-domain energy distribution of the first speech frame and the frequency-domain energy distribution of the second speech frame, the method further comprises:

   determining a local maximum point of the frequency-domain energy correlation coefficient;
   grouping the original speech signal by using the local maximum point as a grouping point; and
   performing normalization processing on each group obtained by grouping, and calculating a corrected frequency-domain energy correlation coefficient according to the frequency-domain energy correlation coefficient and a result of the normalization processing; and
   correspondingly, the segmenting the original speech signal according to the frequency-domain energy correlation coefficient comprises:
   segmenting the original speech signal according to the corrected frequency-domain energy correlation coefficient.

3. The method according to claim 2, wherein the calculating the corrected frequency-domain energy correlation coefficient according to the frequency-domain energy correlation coefficient and a result of the normalization processing specifically comprises:

calculating the corrected frequency-domain energy correlation coefficient according to a formula

$$r_k' = r_k + (1 - \max(r_{k1}))$$

wherein $r_k'$ is the calculated corrected frequency-domain energy correlation coefficient, $r_k$ is the frequency-domain energy correlation coefficient, $r_{k1}$ is a frequency-domain energy correlation coefficient of a local maximum point of each group after the grouping, and $\max(r_{k1})$ is a maximum frequency-domain energy correlation coefficient of the local maximum point of each group after the grouping.

4. The method according to any one of claims 1 to 3, wherein the segmenting the original speech signal according to the frequency-domain energy correlation coefficient specifically comprises:

determining (S301) a local minimum point of the frequency-domain energy correlation coefficient; and
if the local minimum point is less than or equal to a set threshold, segmenting (S302) the original speech signal by using the local minimum point as a segmentation point.

5. The method according to claim 4, wherein after the segmenting the original speech signal according to the frequency-domain energy correlation coefficient, the method further comprises:

calculating an average value of time-domain energy within a set time-domain range that uses each segmentation point in the original speech signal as a center; and
if the calculated corresponding average value within the set time-domain range that uses each segmentation point as the center is less than or equal to a set value, merging two segments involved by corresponding segmentation points.

6. The method according to claim 1, wherein the obtaining a first ratio of total energy within any one of the frequency bands of the first speech frame to total energy of the first speech frame according to a real part of the first frequency-domain signal and an imaginary part of the first frequency-domain signal specifically comprises:

obtaining the first ratio according to

$$ratio\_energy_k(f) = \frac{\sum\limits_{i=0}^{f}(\mathrm{Re}\_fft^2(i) + \mathrm{Im}\_fft^2(i))}{\sum\limits_{i=0}^{(F_{\lim}-1)}(\mathrm{Re}\_fft^2(i) + \mathrm{Im}\_fft^2(i))} \times 100\% \qquad f \in [0,(F_{\lim}-1)], \text{ wherein}$$

$ratio\_energy_k(f)$ represents the first ratio of the total energy within any one of the frequency bands of the first speech frame to the total energy of the first speech frame, a value of $i$ is within $0 \sim f$, $f$ represents a quantity of spectral lines, $f \in [0,(F_{\lim}-1)]$, $(F_{\lim}-1)$ represents a maximum value of the quantity of the spectral lines of the first speech frame, Re\_$fft(i)$ represents the real part of the first frequency-domain signal, Im\_$fft(i)$ represents the imaginary part of the first frequency-domain signal, $\sum\limits_{i=0}^{(F_{\lim}-1)}(\mathrm{Re}\_fft^2(i) + \mathrm{Im}\_fft^2(i))$ represents the

total energy of the first speech frame, and $\sum\limits_{i=0}^{f}(\mathrm{Re}\_fft^2(i) + \mathrm{Im}\_fft^2(i))$ represents total energy within a

frequency range $0 \sim f$ of the first speech frame.

7. The method according to claim 6, wherein the performing derivation on the first ratio is specifically:

performing the derivation on the first ratio according to

$$ratio\_energy_k'(f) = \left( \sum\limits_{n=0}^{N} \left( \left( \prod\limits_{\substack{i=0 \\ i \neq n}}^{N} \frac{f-M-i}{n-i} \right) * ratio\_energy_k(n+M) \right) \right)' \qquad \text{wherein}$$

N represents that the foregoing numerical differentiation is N points; and M represents that the derivative value and is obtained by using a first ratio within a range $f \in [M,(M+N-1)]$.

8. The method according to claim 7, wherein the obtaining a frequency-domain energy correlation coefficient between the first speech frame and the second speech frame according to the frequency-domain energy distribution of the first speech frame and the frequency-domain energy distribution of the second speech frame is specifically: calculating the correlation coefficient $r_k$ according to

$$r_k = \frac{F_{\lim} \cdot sum_{xy}(k) - sum_x(k-1) \cdot sum_x(k)}{\sqrt{F_{\lim} \cdot sum_{xx}(k-1) - (sum_x(k-1))^2} \cdot \sqrt{F_{\lim} \cdot sum_{xx}(k) - (sum_x(k))^2}}$$ wherein

$$sum_x(i) = \sum_{f=0}^{(F_{\lim}-1)} ratio\_energy_i'(f)$$ $$sum_{xx}(i) = \sum_{f=0}^{(F_{\lim}-1)} ratio\_energy_i'(f)^2$$ and

$$sum_{xy}(i) = \sum_{f=0}^{(F_{\lim}-1)} \left[ratio\_energy_{i-1}'(f) \cdot ratio\_energy_i'(f)\right]$$ wherein $k$-1 represents the first speech frame,

$k$ represents the second speech frame, and $k$ is greater than or equal to 1.

9. An apparatus for processing a speech signal according to frequency-domain energy, comprising:

a receiving module (501), configured to receive an original speech signal, wherein the original speech signal comprises a first speech frame and a second speech frame that are adjacent to each other;
a transformation module (502), configured to perform a Fourier Transform on the first speech frame to obtain a first frequency-domain signal, and perform a Fourier Transform on the second speech frame to obtain a second frequency-domain signal;
an energy distribution module (503), configured to obtain a frequency-domain energy distribution of the first speech frame according to the first frequency-domain signal, and obtain a frequency-domain energy distribution of the second speech frame according to the second frequency-domain signal, wherein the frequency-domain energy distribution represents an energy distribution characteristic of the speech frame in a frequency domain;
a correlation module (504), configured to obtain a frequency-domain energy correlation coefficient between the first speech frame and the second speech frame according to the frequency-domain energy distribution of the first speech frame and the frequency-domain energy distribution of the second speech frame, wherein the frequency-domain energy correlation coefficient is used to represent a spectral change from the first speech frame to the second speech frame; and
a segmentation module (505), configured to segment the original speech signal according to the frequency-domain energy correlation coefficient;
wherein a frequency range of the first speech frame comprises at least two frequency bands, wherein the energy distribution module (503) is specifically configured to:

obtain a first ratio of total energy within any one of the frequency bands of the first speech frame to total energy of the first speech frame according to a real part of the first frequency-domain signal and an imaginary part of the first frequency-domain signal; and
perform derivation on the first ratio to obtain a first derivative that represents the frequency-domain energy distribution of the first speech frame; and
wherein a frequency range of the second speech frame comprises at least two frequency bands, wherein the energy distribution module (503) is specifically configured to:

obtain a second ratio of total energy within any one of the frequency bands of the second speech frame to total energy of the second speech frame according to a real part of the second frequency-domain signal and an imaginary part of the second frequency-domain signal; and
perform derivation on the second ratio to obtain a second derivative that represents the frequency-domain energy distribution of the second speech frame;

wherein the correlation module (504) is specifically configured to:

determine the frequency-domain energy correlation coefficient between the first speech frame and the second speech frame according to the first derivative within the frequency range of the first speech frame, the second derivative, and a product of the first derivative and the second derivative.

**10.** The apparatus according to claim 9, wherein the correlation module (504) is further configured to:

determine a local maximum point of the frequency-domain energy correlation coefficient;
group the original speech signal by using the local maximum point as a grouping point; and
perform normalization processing on each group obtained by grouping, and calculate a corrected frequency-domain energy correlation coefficient according to the frequency-domain energy correlation coefficient and a result of the normalization processing; and
correspondingly, the segmentation module is configured to:
segment the original speech signal according to the corrected frequency-domain energy correlation coefficient.

**11.** The apparatus according to claim 10, wherein the correlation module (504) is specifically configured to:
calculate the corrected frequency-domain energy correlation coefficient according to a formula

$$r_k^{'} = r_k + (1 - \max(r_{k1}))$$

, wherein $r_k^{'}$ is the calculated corrected frequency-domain energy correlation coefficient, $r_k$ is the frequency-domain energy correlation coefficient, $r_{k1}$ is a frequency-domain energy correlation coefficient of a local maximum point of each group after the grouping, and $\max(r_{k1})$ is a maximum frequency-domain energy correlation coefficient of the local maximum point of each group after the grouping.

**12.** The apparatus according to claim 9, wherein the energy distribution module (503) is specifically configured to:

obtain the first ratio according to $$ratio\_energy_k(f) = \frac{\sum\limits_{i=0}^{f}(\mathrm{Re}\_fft^2(i) + \mathrm{Im}\_fft^2(i))}{\sum\limits_{i=0}^{(F_{\lim}-1)}(\mathrm{Re}\_fft^2(i) + \mathrm{Im}\_fft^2(i))} \times 100\%$$

,

$f \in [0, (F_{\lim}-1)]$, wherein
$ratio\_energy_k(f)$ represents the first ratio of the total energy within any one of the frequency bands of the first speech frame to the total energy of the first speech frame, a value of $i$ is within 0-$f$, $f$ represents a quantity of spectral lines, $f \in [0, (F_{\lim}-1)]$, $(F_{\lim}-1)$ represents a maximum value of the quantity of the spectral lines of the first speech frame, $\mathrm{Re}\_fft(i)$ represents the real part of the first frequency-domain signal, $\mathrm{Im}\_fft(i)$ represents the imaginary part of the first frequency-domain signal, $\sum\limits_{i=0}^{(F_{\lim}-1)}(\mathrm{Re}\_fft^2(i) + \mathrm{Im}\_fft^2(i))$ represents the

total energy of the first speech frame, and $\sum\limits_{i=0}^{f}(\mathrm{Re}\_fft^2(i) + \mathrm{Im}\_fft^2(i))$ represents total energy within a frequency range 0~$f$ of the first speech frame.

**13.** The apparatus according to any one of claims 9 to 12, wherein the energy distribution module (503) is specifically configured to:

perform the derivation on the first ratio according to

$$ratio\_energy_k^{'}(f) = \left( \sum_{n=0}^{N} \left( \left( \prod_{\substack{i=0 \\ i \neq n}}^{N} \frac{f - M - i}{n - i} \right) * ratio\_energy_k(n + M) \right) \right)^{'}$$ wherein

,

N represents that the foregoing numerical differentiation is N points; and M represents that the derivative value and is obtained by using a first ratio within a range $f \in [M, (M+N-1)]$.

**14.** The apparatus according to claim 13, wherein the correlation module (504) is specifically configured to:
calculate the correlation coefficient $r_k$ according to

$$r_k = \frac{F_{\lim} \cdot sum_{xy}(k) - sum_x(k-1) \cdot sum_x(k)}{\sqrt{F_{\lim} \cdot sum_{xx}(k-1) - (sum_x(k-1))^2} \cdot \sqrt{F_{\lim} \cdot sum_{xx}(k) - (sum_x(k))^2}}, \quad k \geq 1, \quad \text{wherein}$$

$$sum_x(i) = \sum_{f=0}^{(F_{\lim}-1)} ratio\_energy'_i(f) \qquad sum_{xx}(i) = \sum_{f=0}^{(F_{\lim}-1)} ratio\_energy'_i(f)^2,$$

$$sum_{xy}(i) = \sum_{f=0}^{(F_{\lim}-1)} \left[ ratio\_energy'_{i-1}(f) \cdot ratio\_energy'_i(f) \right] \quad \text{wherein } k\text{-1 is the first speech frame, } k \text{ is the}$$

second speech frame, and *k* is greater than or equal to 1.

**Patentansprüche**

1. Verfahren zur Verarbeitung eines Sprachsignals nach Frequenzbereichsenergie, wobei das Verfahren umfasst:

Empfang (101) eines originalen Sprachsignals, wobei das originale Sprachsignal einen ersten Sprachframe und einen zweiten Sprachframe umfasst, die nebeneinander liegen;
Anwendung (102) einer Fouriertransformation auf den ersten Sprachframe zum Abrufen eines ersten Frequenzbereichssignals und Anwendung einer Fouriertransformation auf den zweiten Sprachframe zum Abrufen eines zweiten Frequenzbereichssignals;
Abruf (103) einer Frequenzbereichsenergieverteilung des ersten Sprachframes nach dem ersten Frequenzbereichssignal und Abruf einer Frequenzbereichsenergieverteilung des zweiten Sprachframes nach dem zweiten Frequenzbereichssignal, wobei die Frequenzbereichsenergieverteilung eine Energieverteilungseigenschaft des Sprachframes in einem Frequenzbereich darstellt;
Abruf (104) eines Frequenzbereichsenergie-Korrelationskoeffizienten zwischen dem ersten Sprachframe und dem zweiten Sprachframe nach der Frequenzbereichsenergieverteilung des ersten Sprachframes und der Frequenzbereichsenergieverteilung des zweiten Sprachframes, wobei der Frequenzbereichsenergie-Korrelationskoeffizient verwendet wird, um eine spektrale Änderung von dem ersten Sprachframe zu dem zweiten Sprachframe darzustellen; und
Segmentierung (105) des originalen Sprachsignals nach dem Frequenzbereichsenergie-Korrelationskoeffizienten;
wobei ein Frequenzbereich des ersten Sprachframes wenigstens zwei Frequenzbänder umfasst, wobei der Abruf einer Frequenzbereichsenergieverteilung des ersten Sprachframes nach dem ersten Frequenzbereichssignal speziell umfasst: Abruf (S203) eines ersten Verhältnisses der Gesamtenergie innerhalb eines der Frequenzbänder des ersten Sprachframes zur Gesamtenergie des ersten Sprachframes nach einem realen Teil des ersten Frequenzbereichssignals und einem gedachten Teil des ersten Frequenzbereichssignals; und wobei ein Frequenzbereich des zweiten Sprachframes wenigstens zwei Frequenzbänder umfasst, wobei der Abruf einer Frequenzbereichsenergieverteilung des zweiten Sprachframes nach dem zweiten Frequenzbereichssignal speziell umfasst: Abruf eines zweiten Verhältnisses der Gesamtenergie innerhalb eines der Frequenzbänder des zweiten Sprachframes zur Gesamtenergie des zweiten Sprachframes nach einem realen Teil des zweiten Frequenzbereichssignals und einem gedachten Teil des zweiten Frequenzbereichssignals; und
Anwendung (S204) der Ableitung auf das erste Verhältnis, um einen ersten abgeleiteten Wert abzurufen, der die Frequenzbereichsenergieverteilung des ersten Sprachframes darstellt; und Anwendung der Ableitung auf das zweite Verhältnis, um einen zweiten abgeleiteten Wert abzurufen, der die Frequenzbereichsenergieverteilung des zweiten Sprachframes darstellt;
wobei der Abruf eines Frequenzbereichsenergie-Korrelationskoeffizienten zwischen dem ersten Sprachframe und dem zweiten Sprachframe nach der Frequenzbereichsenergieverteilung des ersten Sprachframes und der Frequenzbereichsenergieverteilung des zweiten Sprachframes speziell umfasst:
Bestimmung des Frequenzbereichsenergie-Korrelationskoeffizienten zwischen dem ersten Sprachframe und dem zweiten Sprachframe nach dem ersten abgeleiteten Wert innerhalb des Frequenzbereichs des ersten Sprachframes, dem zweiten abgeleiteten Wert, und einem Produkt des ersten abgeleiteten Werts und des zweiten abgeleiteten Werts.

2. Verfahren nach Anspruch 1, wobei das Verfahren nach Abruf eines Frequenzbereichsenergie-Korrelationskoeffizienten zwischen dem ersten Sprachframe und dem zweiten Sprachframe nach der Frequenzbereichsenergieverteilung des ersten Sprachframes und der Frequenzbereichsenergieverteilung des zweiten Sprachframes ferner umfasst:

Bestimmung eines örtlichen Maximalpunkts des Frequenzbereichsenergie-Korrelationskoeffizienten;
Gruppierung des originalen Sprachsignals durch Verwendung des örtlichen Maximalpunkts als Gruppierungspunkt; und
Anwendung der Normalisierungsverarbeitung auf jede Gruppe, die durch die Gruppierung erhalten wurde, und Berechnung eines korrigierten Frequenzbereichsenergie-Korrelationskoeffizienten nach dem Frequenzbereichsenergie-Korrelationskoeffizienten und einem Ergebnis der Normalisierungsverarbeitung; und
entsprechend umfasst die Segmentierung des originalen Sprachsignals nach dem Frequenzbereichsenergie-Korrelationskoeffizienten:
Segmentierung des originalen Sprachsignals nach dem korrigierten Frequenzbereichsenergie-Korrelationskoeffizienten.

3.  Verfahren nach Anspruch 2, wobei die Berechnung des korrigierten Frequenzbereichsenergie-Korrelationskoeffizienten nach dem Frequenzbereichsenergie-Korrelationskoeffizienten und einem Ergebnis der Normalisierungsverarbeitung speziell umfasst:
Berechnung des korrigierten Frequenzbereichsenergie-Korrelationskoeffizienten nach einer Formel
$$r_k^{'} = r_k + (1 - \max(r_{k1}))$$ wobei $r_k^{'}$ der berechnete korrigierte Frequenzbereichsenergie-Korrelationskoef-fizient ist, $r_k$ der Frequenzbereichsenergie-Korrelationskoeffizient ist, $r_{k1}$ ein Frequenzbereichsenergie-Korrelations-koeffizient eines örtlichen Maximalpunkts jeder Gruppe nach der Gruppierung ist und max $(r_{k1})$ ein maximaler Frequenzbereichsenergie-Korrelationskoeffizient des örtlichen Maximalpunkts jeder Gruppe nach der Gruppierung ist.

4.  Verfahren nach einem der Ansprüche 1 bis 3, wobei die Segmentierung des originalen Sprachsignals nach dem Frequenzbereichsenergie-Korrelationskoeffizienten speziell umfasst:

Bestimmung (S301) eines örtlichen Mindestpunkts des Frequenzbereichsenergie-Korrelationskoeffizienten; und
wenn der örtliche Mindestpunkt kleiner oder gleich ist wie ein festgelegter Grenzwert, Segmentierung (S302) des originalen Sprachsignals durch Verwendung des örtlichen Mindestpunkts als Segmentierungspunkt.

5.  Verfahren nach Anspruch 4, wobei das Verfahren nach der Segmentierung des originalen Sprachsignals nach dem Frequenzbereichsenergie-Korrelationskoeffizienten ferner umfasst:

Berechnung eines Durchschnittswerts der Zeitbereichsenergie innerhalb eines festgelegten Zeitbereichs, der jeden Segmentierungspunkt im originalen Sprachsignal als Mittelpunkt verwendet; und
wenn der berechnete entsprechende Durchschnittswert innerhalb des festgelegten Zeitbereichs, der jeden Segmentierungspunkt als Mittelpunkt verwendet, kleiner oder gleich ist wie ein festgelegter Wert, die Verbindung von zwei beteiligten Segmenten durch entsprechende Segmentierungspunkte.

6.  Verfahren nach Anspruch 1, wobei der Abruf eines ersten Verhältnisses der Gesamtenergie innerhalb eines der Frequenzbänder des ersten Sprachframes zur Gesamtenergie des ersten Sprachframes nach einem realen Teil des ersten Frequenzbereichssignals und einem gedachten Teil des ersten Frequenzbereichssignals speziell umfasst:
Abruf des ersten Verhältnisses nach

$$ratio\_energy_k(f) = \frac{\sum_{i=0}^{f}(\mathrm{Re}\_fft^2(i) + \mathrm{Im}\_fft^2(i))}{\sum_{i=0}^{(F_{\lim}-1)}(\mathrm{Re}\_fft^2(i) + \mathrm{Im}\_fft^2(i))} \times 100\%$$
  $f \in [0,(F_{\lim}-1)]$  wobei

$ratio\_energy_k(f)$ das erste Verhältnis der Gesamtenergie innerhalb eines der Frequenzbänder des ersten Sprach-rames zur Gesamtenergie des ersten Sprachframes darstellt, ein Wert von $i$ im Bereich von $0 \sim f$ liegt, f eine Menge von Spektrallinien darstellt, $f \in [0,(F_{\lim}-1)$, $(F_{\lim}-1)$ einen maximalen Wert der Menge der Spektrallinien des ersten Sprachframes darstellt, Re_*fft*(*i*) den realen Teil des ersten Frequenzbereichssignals darstellt, Im_*fft*(*i*) den gedachten Teil des ersten Frequenzbereichssignals darstellt, $\sum_{i=0}^{(F_{\lim}-1)}(\mathrm{Re}\_{} ff t^2(i)+\mathrm{Im}\_{} ff t^2(i))$ die Gesamtenergie des ersten Sprachframes darstellt und $\sum_{i=0}^{f}(\mathrm{Re}\_{} ff t^2(i)+\mathrm{Im}\_{} ff t^2(i))$ die Gesamtenergie innerhalb eines Frequenzbereichs 0~*f* des ersten Sprachframes darstellt.

7. Verfahren nach Anspruch 6, wobei die Anwendung der Ableitung auf das erste Verhältnis speziell umfasst:
Anwendung der Ableitung auf das erste Verhältnis nach

$$ratio\_energy'_k(f) = \left(\sum_{n=0}^{N}\left(\left(\prod_{\substack{i=0\\i\neq n}}^{N}\frac{f-M-i}{n-i}\right)*ratio\_energy_k(n+M)\right)\right)'$$ wobei N darstellt, dass die vorherige numerische Differenzierung N Punkte beträgt; und M darstellt, dass der abgeleitete Wert und durch Verwendung eines ersten Verhältnisses innerhalb eines Bereichs $f \in [M,(M+N\text{-}1)]$ abgerufen wird.

8. Verfahren nach Anspruch 7, wobei der Abruf eines Frequenzbereichsenergie-Korrelationskoeffizienten zwischen dem ersten Sprachframe und dem zweiten Sprachframe nach der Frequenzbereichsenergieverteilung des ersten Sprachframes und der Frequenzbereichsenergieverteilung des zweiten Sprachframes speziell umfasst:
Berechnung des Korrelationskoeffizienten $r_k$ nach

$$r_k = \frac{F_{\lim}\cdot sum_{xy}(k)-sum_x(k-1)\cdot sum_x(k)}{\sqrt{F_{\lim}\cdot sum_{xx}(k-1)-(sum_x(k-1))^2}\cdot\sqrt{F_{\lim}\cdot sum_{xx}(k)-(sum_x(k))^2}}$$ wobei

$$sum_x(i) = \sum_{f=0}^{(F_{\lim}-1)}ratio\_energy'_i(f) \qquad sum_{xx}(i) = \sum_{f=0}^{(F_{\lim}-1)}ratio\_energy'_i(f)^2$$ und

$$sum_{xy}(i) = \sum_{f=0}^{(F_{\lim}-1)}[ratio\_energy'_{i-1}(f)\cdot ratio\_energy'_i(f)]$$ wobei k - 1 den ersten Sprachframe darstellt, k den zweiten Sprachframe darstellt und k größer oder gleich 1 ist.

9. Vorrichtung zur Verarbeitung eines Sprachsignals nach Frequenzbereichsenergie, umfassend:

ein Empfangsmodul (501), konfiguriert, um ein originales Sprachsignal zu empfangen, wobei das originale Sprachsignal einen ersten Sprachframe und einen zweiten Sprachframe umfasst, die nebeneinander liegen;
ein Transformationsmodul (502), konfiguriert, um eine Fouriertransformation auf den ersten Sprachframe anzuwenden, um ein erstes Frequenzbereichssignal abzurufen und eine Fouriertransformation auf den zweiten Sprachframe anzuwenden, um ein zweites Frequenzbereichssignal abzurufen;
ein Energieverteilungsmodul (503), konfiguriert, um eine Frequenzbereichsenergieverteilung des ersten Sprachframes nach dem ersten Frequenzbereichssignal abzurufen und eine Frequenzbereichsenergieverteilung des zweiten Sprachframes nach dem zweiten Frequenzbereichssignal abzurufen, wobei die Frequenzbereichsenergieverteilung eine Energieverteilungseigenschaft des Sprachframes in einem Frequenzbereich darstellt;
ein Korrelationsmodul (504), konfiguriert, um einen Frequenzbereichsenergie-Korrelationskoeffizienten zwischen dem ersten Sprachframe und dem zweiten Sprachframe nach der Frequenzbereichsenergieverteilung des ersten Sprachframes und der Frequenzbereichsenergieverteilung des zweiten Sprachframes abzurufen, wobei der Frequenzbereichsenergie-Korrelationskoeffizient verwendet wird, um eine spektrale Änderung von dem ersten Sprachframe zu dem zweiten Sprachframe darzustellen; und
ein Segmentierungsmodul (505), konfiguriert, um das originale Sprachsignal nach dem Frequenzbereichsenergie-Korrelationskoeffizienten zu segmentieren;
wobei ein Frequenzbereich des ersten Sprachframes wenigstens zwei Frequenzbänder umfasst, wobei das Energieverteilungsmodul (503) speziell konfiguriert ist, um:

ein erstes Verhältnis der Gesamtenergie innerhalb eines der Frequenzbänder des ersten Sprachframes zur Gesamtenergie des ersten Sprachframes nach einem realen Teil des ersten Frequenzbereichssignals und einem gedachten Teil des ersten Frequenzbereichssignals abzurufen; und
eine Ableitung auf das erste Verhältnis anzuwenden, um einen ersten abgeleiteten Wert abzurufen, der die Frequenzbereichsenergieverteilung des ersten Sprachframes darstellt; und

wobei ein Frequenzbereich des zweiten Sprachframes wenigstens zwei Frequenzbänder umfasst, wobei das Energieverteilungsmodul (503) speziell konfiguriert ist, um:

ein zweites Verhältnis der Gesamtenergie innerhalb eines der Frequenzbänder des zweiten Sprachframes zur Gesamtenergie des zweiten Sprachframes nach einem realen Teil des zweiten Frequenzbereichssignals und einem gedachten Teil des zweiten Frequenzbereichssignals abzurufen; und
eine Ableitung auf das zweite Verhältnis anzuwenden, um einen zweiten abgeleiteten Wert abzurufen, der die Frequenzbereichsenergieverteilung des zweiten Sprachframes darstellt;

wobei das Korrelationsmodul (504) speziell konfiguriert ist, um:
den Frequenzbereichsenergie-Korrelationskoeffizienten zwischen dem ersten Sprachframe und dem zweiten Sprachframe nach dem ersten abgeleiteten Wert innerhalb des Frequenzbereichs des ersten Sprachframes, dem zweiten abgeleiteten Wert und einem Produkt des ersten abgeleiteten Werts und des zweiten abgeleiteten Werts zu bestimmen.

10. Vorrichtung nach Anspruch 9, wobei das Korrelationsmodul (504) ferner konfiguriert ist, um:

einen örtlichen Maximalpunkt des Frequenzbereichsenergie-Korrelationskoeffizienten zu bestimmen;
das originale Sprachsignal unter Verwendung des örtlichen Maximalpunkts als Gruppierungspunkt zu gruppieren; und
die Normalisierungsverarbeitung auf jede Gruppe anzuwenden, die durch die Gruppierung erhalten wurde und einen korrigierten Frequenzbereichsenergie-Korrelationskoeffizienten nach dem Frequenzbereichsenergie-Korrelationskoeffizienten und einem Ergebnis der Normalisierungsverarbeitung zu berechnen; und
das Segmentierungsmodul entsprechend konfiguriert ist, um:
das originale Sprachsignal nach dem korrigierten Frequenzbereichsenergie-Korrelationskoeffizienten zu segmentieren.

11. Vorrichtung nach Anspruch 10, wobei das Korrelationsmodul (504) speziell konfiguriert ist, um:

den korrigierten Frequenzbereichsenergie-Korrelationskoeffizienten nach einer Formel $r_k' = r_k + (1 - \max(r_{k1}))$

zu berechnen, wobei $r_k'$ der berechnete korrigierte Frequenzbereichsenergie-Korrelationskoeffizient ist, $r_k$ der Frequenzbereichsenergie-Korrelationskoeffizient ist, $r_{k1}$ ein Frequenzbereichsenergie-Korrelationskoeffizient eines örtlichen Maximalpunkts jeder Gruppe nach der Gruppierung ist und $\max(r_{k1})$ ein maximaler Frequenzbereichsenergie-Korrelationskoeffizient des örtlichen Maximalpunkts jeder Gruppe nach der Gruppierung ist.

12. Vorrichtung nach Anspruch 9, wobei das Energieverteilungsmodul (503) speziell konfiguriert ist, um:

$$ratio\_energy_k(f) = \frac{\sum_{i=0}^{f}(\mathrm{Re}\_fft^2(i) + \mathrm{Im}\_fft^2(i))}{\sum_{i=0}^{(F_{lim}-1)}(\mathrm{Re}\_fft^2(i) + \mathrm{Im}\_fft^2(i))} \times 100\% \qquad f \in [0, (F_{lim}$$

das erste Verhältnis nach

- 1)], abzurufen, wobei $ratio\_energy_k(f)$ das erste Verhältnis der Gesamtenergie innerhalb eines der Frequenzbänder des ersten Sprachframes zur Gesamtenergie des ersten Sprachframes darstellt, ein Wert von i innerhalb von $0 \sim f$ liegt, f eine Menge von Spektrallinien darstellt, $f \in [0,(F_{lim} - 1)]$, $(F_{lim} - 1)$ einen maximalen Wert der Menge der Spektrallinien des ersten Sprachframes darstellt, $\mathrm{Re}\_fft(i)$ den realen Teil des ersten Frequenzbereichssignals darstellt, $\mathrm{Im}\_fft(i)$ den gedachten Teil des ersten Frequenzbereichssignals darstellt, $\sum_{i=0}^{(F_{lim}-1)}(\mathrm{Re}\_fft^2(i) + \mathrm{Im}\_fft^2(i))$ die Gesamtenergie des ersten Sprachframes darstellt und

$$\sum_{i=0}^{f}(\mathrm{Re}\_\mathit{fft}^2(i)+\mathrm{Im}\_\mathit{fft}^2(i))$$ die Gesamtenergie innerhalb eines Frequenzbereichs 0 ~ *f* des ersten Sprachframes darstellt.

**13.** Vorrichtung nach einem der Ansprüche 9 bis 12, wobei das Energieverteilungsmodul (503) speziell konfiguriert ist, um:

die Ableitung auf das erste Verhältnis nach

$$ratio\_energy_k'(f)=\left(\sum_{n=0}^{N}\left(\left(\prod_{\substack{i=0\\i\neq n}}^{N}\frac{f-M-i}{n-i}\right)*ratio\_energy_k(n+M)\right)\right)'$$

anzuwenden, wobei N darstellt, dass die vorherige numerische Differenzierung N Punkte beträgt; und M darstellt, dass der abgeleitete Wert und durch Verwendung eines ersten Verhältnisses in einem Bereich $f \in [M, (M + N -1)]$ erhalten wird.

**14.** Vorrichtung nach Anspruch 13, wobei das Korrelationsmodul (504) speziell konfiguriert ist, um:

den Korrelationskoeffizienten $r_k$ nach

$$r_k=\frac{F_{\lim}\cdot sum_{xy}(k)-sum_x(k-1)\cdot sum_x(k)}{\sqrt{F_{\lim}\cdot sum_{xx}(k-1)-(sum_x(k-1))^2}\cdot\sqrt{F_{\lim}\cdot sum_{xx}(k)-(sum_x(k))^2}},$$ $k \geq 1$ zu berechnen, wobei

$$sum_x(i)=\sum_{f=0}^{(F_{\lim}-1)}ratio\_energy_i'(f)$$ $$sum_{xx}(i)=\sum_{f=0}^{(F_{\lim}-1)}ratio\_energy_i'(f)^2$$ und

$$sum_{xy}(i)=\sum_{f=0}^{(F_{\lim}-1)}[ratio\_energy_{i-1}'(f)\cdot ratio\_energy_i'(f)]$$ wobei k - 1 den ersten Sprachframe darstellt, k den zweiten Sprachframe darstellt und k größer oder gleich 1 ist.

## Revendications

**1.** Procédé pour traiter un signal de parole en fonction de l'énergie de domaine fréquentiel, dans lequel le procédé consiste :

à recevoir (101) un signal de parole d'origine, dans lequel le signal de parole d'origine comprend une première trame de parole et une seconde trame de parole qui sont adjacentes l'une à l'autre ;

à effectuer (102) une transformée de Fourier sur la première trame de parole pour obtenir un premier signal de domaine fréquentiel et à effectuer une transformée de Fourier sur la seconde trame de parole pour obtenir un second signal de domaine fréquentiel ;

à obtenir (103) une distribution d'énergie de domaine fréquentiel de la première trame de parole en fonction du premier signal de domaine fréquentiel et à obtenir une distribution d'énergie de domaine fréquentiel de la seconde trame de parole en fonction du second signal de domaine fréquentiel, dans lequel la distribution d'énergie de domaine fréquentiel représente une caractéristique de distribution d'énergie de la trame de parole dans un domaine fréquentiel ;

à obtenir (104) un coefficient de corrélation d'énergie de domaine fréquentiel entre la première trame de parole et la seconde trame de parole en fonction de la distribution d'énergie de domaine fréquentiel de la première trame de parole et de la distribution d'énergie de domaine fréquentiel de la seconde trame de parole, dans lequel le coefficient de corrélation d'énergie de domaine fréquentiel est utilisé pour représenter un changement spectral de la première trame de parole à la seconde trame de parole ; et

à segmenter (105) le signal de parole d'origine en fonction du coefficient de corrélation d'énergie de domaine fréquentiel ;

dans lequel une plage de fréquences de la première trame de parole comprend au moins deux bandes de fréquences, dans lequel l'obtention d'une distribution d'énergie de domaine fréquentiel de la première trame de parole en fonction du premier signal de domaine fréquentiel consiste spécifiquement : à obtenir (S203) un premier rapport entre l'énergie totale dans l'une quelconque des bandes de fréquences de la première trame de parole et l'énergie totale de la première trame de parole en fonction d'une partie réelle du premier signal de domaine fréquentiel et d'une partie imaginaire du premier signal de domaine fréquentiel ; et dans lequel une plage de fréquences de la seconde trame de parole comprend au moins deux bandes de fréquences, dans lequel l'obtention d'une distribution d'énergie de domaine fréquentiel de la seconde trame de parole en fonction du second signal de domaine fréquentiel consiste spécifiquement :

à obtenir un second rapport entre l'énergie totale dans l'une quelconque des bandes de fréquences de la seconde trame de parole et l'énergie totale de la seconde trame de parole en fonction d'une partie réelle du second signal de domaine fréquentiel et d'une partie imaginaire du second signal de domaine fréquentiel ; et

à effectuer (S204) une dérivation sur le premier rapport pour obtenir une première dérivée qui représente la distribution d'énergie de domaine fréquentiel de la première trame de parole ; et à effectuer une dérivation sur le second rapport pour obtenir une seconde dérivée qui représente la distribution d'énergie de domaine fréquentiel de la seconde trame de parole ;

dans lequel l'obtention d'un coefficient de corrélation d'énergie de domaine fréquentiel entre la première trame de parole et la seconde trame de parole en fonction de la distribution d'énergie de domaine fréquentiel de la première trame de parole et de la distribution d'énergie de domaine fréquentiel de la seconde trame de parole consiste spécifiquement :

à déterminer le coefficient de corrélation d'énergie de domaine fréquentiel entre la première trame de parole et la seconde trame de parole en fonction de la première dérivée dans la plage de fréquences de la première trame de parole, de la seconde dérivée et d'un produit de la première dérivée et de la seconde dérivée.

2. Procédé selon la revendication 1, dans lequel, après l'obtention d'un coefficient de corrélation d'énergie de domaine fréquentiel entre la première trame de parole et la seconde trame de parole en fonction de la distribution d'énergie de domaine fréquentiel de la première trame de parole et de la distribution d'énergie de domaine fréquentiel de la seconde trame de parole, le procédé consiste en outre :

à déterminer un point maximal local du coefficient de corrélation d'énergie de domaine fréquentiel ;
à regrouper le signal de parole d'origine en utilisant le point maximal local comme point de regroupement ; et
à effectuer un traitement de normalisation sur chaque groupe obtenu par regroupement et à calculer un coefficient de corrélation d'énergie de domaine fréquentiel corrigé en fonction du coefficient de corrélation d'énergie de domaine fréquentiel et d'un résultat du traitement de normalisation ; et
de manière correspondante, la segmentation du signal de parole d'origine en fonction du coefficient de corrélation d'énergie de domaine fréquentiel consiste :
à segmenter le signal de parole d'origine en fonction du coefficient de corrélation d'énergie de domaine fréquentiel corrigé.

3. Procédé selon la revendication 2, dans lequel le calcul du coefficient de corrélation d'énergie de domaine fréquentiel corrigé en fonction du coefficient de corrélation d'énergie de domaine fréquentiel et d'un résultat du traitement de normalisation consiste spécifiquement :

à calculer le coefficient de corrélation d'énergie de domaine fréquentiel corrigé selon une formule $r_k' = r_k + (1 - \max(r_{k1}))$, dans lequel $r_k'$ est le coefficient de corrélation d'énergie de domaine fréquentiel corrigé, $r_k$ est le coefficient de corrélation d'énergie de domaine fréquentiel, $r_{k1}$ est un coefficient de corrélation d'énergie de domaine fréquentiel d'un point maximal local de chaque groupe après le regroupement et $\max(r_{k1})$ est un coefficient de corrélation d'énergie de domaine fréquentiel maximal du point maximal local de chaque groupe après le regroupement.

4. Procédé selon l'une quelconque des revendications 1 à 3, dans lequel la segmentation du signal de parole d'origine en fonction du coefficient de corrélation d'énergie de domaine fréquentiel consiste spécifiquement :

à déterminer (S301) un point minimal local du coefficient de corrélation d'énergie de domaine fréquentiel ; et

si le point minimal local est inférieur ou égal à un seuil défini, à segmenter (S302) le signal de parole d'origine en utilisant le point minimal local comme point de segmentation.

5. Procédé selon la revendication 4, dans lequel, après la segmentation du signal de parole d'origine en fonction du coefficient de corrélation d'énergie de domaine fréquentiel, le procédé consiste en outre :

à calculer une valeur moyenne de l'énergie de domaine temporel dans une plage de domaine temporel définie qui utilise chaque point de segmentation dans le signal de parole d'origine comme centre ; et
si la valeur moyenne correspondante calculée dans la plage de domaine temporel qui utilise chaque point de segmentation comme centre, est inférieure ou égale à une valeur définie, à faire fusionner deux segments impliqués par des points de segmentation correspondants.

6. Procédé selon la revendication 1, dans lequel l'obtention d'un premier rapport entre l'énergie totale dans l'une quelconque des bandes de fréquences de la première trame de parole et l'énergie totale de la première trame de parole en fonction d'une partie réelle du premier signal de domaine fréquentiel et d'une partie imaginaire du premier signal de domaine fréquentiel consiste spécifiquement :
à obtenir le premier rapport en fonction de

$$ratio\_energy_k(f) = \frac{\sum\limits_{i=0}^{f}(\mathrm{Re}\_fft^2(i)+\mathrm{Im}\_fft^2(i))}{\sum\limits_{i=0}^{(F_{lim}-1)}(\mathrm{Re}\_fft^2(i)+\mathrm{Im}\_fft^2(i))} \times 100\% \qquad f \in [0, (F_{lim}-1)] \text{ dans lequel } ratio\_energy_k$$

(f) représente le premier rapport entre l'énergie totale dans l'une quelconque des bandes de fréquences de la première trame de parole et l'énergie totale de la première trame de parole, une valeur de $i$ se situe dans $0 \sim f$, $f$ représente une quantité de lignes spectrales, $f \in [0, F_{lim} - 1]$, $(F_{lim} - 1)$ représente une valeur maximale de la quantité de lignes spectrales de la première trame de parole, $Re\_fft(i)$ représente la partie réelle du premier signal de domaine fréquentiel, $Im\_fft(i)$ représente la partie imaginaire du premier signal de domaine fréquentiel, $\sum\limits_{i=0}^{(F_{lim}-1)}(\mathrm{Re}\_fft^2(i)+\mathrm{Im}\_fft^2(i))$ représente l'énergie totale de la première trame de parole et

$\sum\limits_{i=0}^{f}(\mathrm{Re}\_fft^2(i)+\mathrm{Im}\_fft^2(i))$ représente l'énergie totale dans une plage de fréquences $0 \sim f$ de la première trame de parole.

7. Procédé selon la revendication 6, dans lequel la réalisation de la dérivation sur le premier rapport consiste spécifiquement :
à effectuer la dérivation sur le premier rapport en fonction de

$$ratio\_energy'_k(f) = \left( \sum\limits_{n=0}^{N} \left( \left( \prod\limits_{\substack{i=0 \\ i \neq n}}^{N} \frac{f-M-i}{n-i} \right) * ratio\_energy_k(n+M) \right) \right)' \text{ dans lequel N représente le fait que}$$

la différentiation numérique précédente est de N points ; et M représente le fait que la valeur de dérivée et est obtenue en utilisant un premier rapport dans une plage $f \in [M, (M + N - 1)]$,

8. Procédé selon la revendication 7, dans lequel l'obtention d'un coefficient de corrélation d'énergie de domaine fréquentiel entre la première trame de parole et la seconde trame de parole en fonction de la distribution d'énergie de domaine fréquentiel de la première trame de parole et de la distribution d'énergie de domaine fréquentiel de la seconde trame de parole consiste spécifiquement :
à calculer le coefficient de corrélation $r_k$ en fonction de

$$r_k = \frac{F_{lim} \cdot sum_{xy}(k) - sum_x(k-1) \cdot sum_x(k)}{\sqrt{F_{lim} \cdot sum_{xx}(k-1) - (sum_x(k-1))^2} \cdot \sqrt{F_{lim} \cdot sum_{xx}(k) - (sum_x(k))^2}}, \qquad \text{dans lequel}$$

$$sum_x(i) = \sum\limits_{f=0}^{(F_{lim}-1)} ratio\_energy'_i(f) \qquad\qquad sum_{xx}(i) = \sum\limits_{f=0}^{(F_{lim}-1)} ratio\_energy'_i(f)^2 \qquad \text{et}$$

$$sum_{xy}(i) = \sum_{f=0}^{(F_{lim}-1)} \left[ ratio\_energy'_{i-1}(f) \cdot ratio\_energy'_i(f) \right]$$

dans lequel $k$ - 1 représente la première trame de parole, $k$ représente la seconde trame de parole et $k$ est supérieur ou égal à 1.

9. Appareil pour traiter un signal de parole en fonction de l'énergie de domaine fréquentiel, comprenant :

un module de réception (501), configuré pour recevoir un signal de parole d'origine, dans lequel le signal de parole d'origine comprend une première trame de parole et une seconde trame de parole qui sont adjacentes l'une à l'autre ;

un module de transformation (502), configuré pour effectuer une transformée de Fourier sur la première trame de parole pour obtenir un premier signal de domaine fréquentiel et pour effectuer une transformée de Fourier sur la seconde trame de parole pour obtenir un second signal de domaine fréquentiel ;

un module de distribution d'énergie (503), configuré pour obtenir une distribution d'énergie de domaine fréquentiel de la première trame de parole en fonction du premier signal de domaine fréquentiel et pour obtenir une distribution d'énergie de domaine fréquentiel de la seconde trame de parole en fonction du second signal de domaine fréquentiel, dans lequel la distribution d'énergie de domaine fréquentiel représente une caractéristique de distribution d'énergie de la trame de parole dans un domaine fréquentiel ;

un module de corrélation (504), configuré pour obtenir un coefficient de corrélation d'énergie de domaine fréquentiel entre la première trame de parole et la seconde trame de parole en fonction de la distribution d'énergie de domaine fréquentiel de la première trame de parole et de la distribution d'énergie de domaine fréquentiel de la seconde trame de parole, dans lequel le coefficient de corrélation d'énergie de domaine fréquentiel est utilisé pour représenter un changement spectral de la première trame de parole à la seconde trame de parole ; et

un module de segmentation (505), configuré pour segmenter le signal de parole d'origine en fonction du coefficient de corrélation d'énergie de domaine fréquentiel ;

dans lequel une plage de fréquences de la première trame de parole comprend au moins deux bandes de fréquences, dans lequel le module de distribution d'énergie (503) est spécifiquement configuré :

pour obtenir un premier rapport entre l'énergie totale dans l'une quelconque des bandes de fréquences de la première trame de parole et l'énergie totale de la première trame de parole en fonction d'une partie réelle du premier signal de domaine fréquentiel et d'une partie imaginaire du premier signal de domaine fréquentiel ; et

pour effectuer une dérivation sur le premier rapport pour obtenir une première dérivée qui représente la distribution d'énergie de domaine fréquentiel de la première trame de parole ; et

dans lequel une plage de fréquences de la seconde trame de parole comprend au moins deux bandes de fréquences, dans lequel le module de distribution d'énergie (503) est spécifiquement configuré :

pour obtenir un second rapport entre l'énergie totale dans l'une quelconque des bandes de fréquences de la seconde trame de parole et l'énergie totale de la seconde trame de parole en fonction d'une partie réelle du second signal de domaine fréquentiel et d'une partie imaginaire du second signal de domaine fréquentiel ; et

pour effectuer une dérivation sur le second rapport pour obtenir une seconde dérivée qui représente la distribution d'énergie de domaine fréquentiel de la seconde trame de parole ;

dans lequel le module de corrélation (504) est spécifiquement configuré :
pour déterminer le coefficient de corrélation d'énergie de domaine fréquentiel entre la première trame de parole et la seconde trame de parole en fonction de la première dérivée dans la plage de fréquences de la première trame de parole, de la seconde dérivée et d'un produit de la première dérivée et de la seconde dérivée.

10. Appareil selon la revendication 9, dans lequel le module de corrélation (504) est en outre configuré :

pour déterminer un point maximal local du coefficient de corrélation d'énergie de domaine fréquentiel ;
pour regrouper le signal de parole d'origine en utilisant le point maximal local comme point de regroupement ; et
pour effectuer un traitement de normalisation sur chaque groupe obtenu par regroupement et pour calculer un coefficient de corrélation d'énergie de domaine fréquentiel corrigé en fonction du coefficient de corrélation d'énergie de domaine fréquentiel et d'un résultat du traitement de normalisation ; et

de manière correspondante, le module de segmentation est configuré :
pour segmenter le signal de parole d'origine en fonction du coefficient de corrélation d'énergie de domaine fréquentiel corrigé.

**11.** Appareil selon la revendication 10, dans lequel le module de corrélation (504) est spécifiquement configuré :
pour calculer le coefficient de corrélation d'énergie de domaine fréquentiel corrigé selon une formule $r_k' = r_k + (1 - \max(r_{k1}))$, dans lequel $r_k'$ est le coefficient de corrélation d'énergie de domaine fréquentiel corrigé, $r_k$ est le coefficient de corrélation d'énergie de domaine fréquentiel, $r_{k1}$ est un coefficient de corrélation d'énergie de domaine fréquentiel d'un point maximal local de chaque groupe après le regroupement et $\max(r_{k1})$ est un coefficient de corrélation d'énergie de domaine fréquentiel maximal du point maximal local de chaque groupe après le regroupement.

**12.** Appareil selon la revendication 9, dans lequel le module de distribution d'énergie (503) est spécifiquement configuré :
pour obtenir le premier rapport en fonction de

$$ratio\_energy_k(f) = \frac{\sum_{i=0}^{f}(\mathrm{Re}\_fft^2(i) + \mathrm{Im}\_fft^2(i))}{\sum_{i=0}^{(F_{\lim}-1)}(\mathrm{Re}\_fft^2(i) + \mathrm{Im}\_fft^2(i))} \times 100\% \qquad f \in [0, (F_{\lim}-1)] \text{ dans lequel}$$

$ratio\_energy_k(f)$ représente le premier rapport entre l'énergie totale dans l'une quelconque des bandes de fréquences de la première trame de parole et l'énergie totale de la première trame de parole, une valeur de $i$ se situe dans $0 \sim f$, $f$ représente une quantité de lignes spectrales, $f \in [0, F_{\lim} - 1]$, $(F_{\lim} - 1)$ représente une valeur maximale de la quantité de lignes spectrales de la première trame de parole, $\mathrm{Re}\_fft(i)$ représente la partie réelle du premier signal de domaine fréquentiel, $\mathrm{Im}\_fft(i)$ représente la partie imaginaire du premier signal de domaine fréquentiel, $\sum_{i=0}^{(F_{\lim}-1)}(\mathrm{Re}\_fft^2(i) + \mathrm{Im}\_fft^2(i))$ représente l'énergie totale de la première trame de parole et $\sum_{i=0}^{f}(\mathrm{Re}\_fft^2(i) + \mathrm{Im}\_fft^2(i))$ représente l'énergie totale dans une plage de fréquences $0 \sim f$ de la première trame de parole.

**13.** Appareil selon l'une quelconque des revendications 9 à 12, dans lequel le module de distribution d'énergie (503) est spécifiquement configuré :
pour effectuer la dérivation sur le premier rapport en fonction de

$$ratio\_energy_k'(f) = \left(\sum_{n=0}^{N}\left(\left(\prod_{\substack{i=0\\i\neq n}}^{N}\frac{f-M-i}{n-i}\right) * ratio\_energy_k(n+M)\right)\right)' \qquad \text{dans lequel N repré-}$$

sente le fait que la différentiation numérique précédente est de N points ; et M représente que la valeur de dérivée et est obtenue en utilisant un premier rapport dans une plage $f \in [M, (M + N - 1)]$.

**14.** Appareil selon la revendication 13, dans lequel le module de corrélation (504) est spécifiquement configuré :
pour calculer le coefficient de corrélation $r_k$ en fonction de

$$r_k = \frac{F_{lim} \cdot sum_{xy}(k) - sum_x(k-1) \cdot sum_x(k)}{\sqrt{F_{lim} \cdot sum_{xx}(k-1) - (sum_x(k-1))^2} \cdot \sqrt{F_{lim} \cdot sum_{xx}(k) - (sum_x(k))^2}}, k \geq 1 \qquad \text{dans} \qquad \text{lequel}$$

$$sum_x(i) = \sum_{f=0}^{(F_{\lim}-1)} ratio\_energy_i'(f) \qquad sum_{xx}(i) = \sum_{f=0}^{(F_{\lim}-1)} ratio\_energy_i'(f)^2 \qquad \text{et}$$

$$sum_{xy}(i) = \sum_{f=0}^{(F_{\lim}-1)}[ratio\_energy_{i-1}'(f) \cdot ratio\_energy_i'(f)] \qquad \text{dans lequel } k - 1 \text{ représente la première}$$

trame de parole, $k$ représente la seconde trame de parole et $k$ est supérieur ou égal à 1.

101

Receive an original speech signal, where the original speech signal includes a first speech frame and a second speech frame that are adjacent to each other

102

Perform a Fourier Transform on the first speech frame to obtain a first frequency-domain signal, and perform a Fourier Transform on the second speech frame to obtain a second frequency-domain signal

103

Obtain a frequency-domain energy distribution of the first speech frame according to the first frequency-domain signal, and obtain a frequency-domain energy distribution of the second speech frame according to the second frequency-domain signal, where the frequency-domain energy distribution represents an energy distribution characteristic of the speech frame in a frequency domain

104

Obtain a frequency-domain energy correlation coefficient between the first speech frame and the second speech frame according to the frequency-domain energy distribution of the first speech frame and the frequency-domain energy distribution of the second speech frame, where the frequency-domain energy correlation coefficient is used to represent a spectral change from the first speech frame to the second speech frame

105

Segment the original speech signal according to the frequency-domain energy correlation coefficient

FIG. 1

S201

Receive an original speech signal, where the original speech signal includes a first speech frame and a second speech frame that are adjacent to each other

S202

Perform a Fourier Transform on the first speech frame to obtain a first frequency-domain signal, and perform a Fourier Transform on the second speech frame to obtain a second frequency-domain signal

S203

Obtain a first ratio of total energy within any one of the frequency ranges of the first speech frame to total energy of the first speech frame according to a real part of the first frequency-domain signal and an imaginary part of the first frequency-domain signal

S204

Perform derivation on the first ratio to obtain a first derivative that represents the frequency-domain energy distribution of the first speech frame

FIG. 2

a) Waveform diagram

b) Spectrogram

FIG. 3

Frequency-domain energy distribution curve

FIG. 4

EP 3 091 534 B1

Derivative of frequency-domain energy distribution curve

FIG. 5

a) Waveform diagram

b) Spectrogram

c) Original correlation coefficient

EP 3 091 534 B1

FIG. 6

a) Waveform diagram

b) Spectrogram

c) Adjusted correlation coefficient

FIG. 7

S301

Determine a local minimum point of a frequency-domain energy correlation coefficient

S302

If the local minimum point is less than or equal to a set threshold, segment a speech signal by using the local minimum point as a segmentation point

FIG. 8

a) Waveform diagram

b) Spectrogram

FIG. 9

FIG. 10

wēn   nuǎn   shī   rùn   de   qì   hòu   huán   jìng

a) Waveform diagram

W        n    an   sh           r        de   q     i                    j    ing

0.1
0.05
0
-0.05
-0.1

0.4352    0.6144  0.7296  0.8832    1.0624  1.2288    1.3824  1.5104  1.7024  1.7664  1.92

0.5248    0.6656  0.8192       0.9984   1.1392  1.28                                    x10⁴

b) Spectrogram

4000
3500
3000
2500
2000
1500
1000
500
0

37    44    51 55 60   67 72    81  86  92  99 103  111    121    136 141    153

FIG. 11

| 501 | 502 | 503 | 504 | 505 |
|---|---|---|---|---|
| Receiving module | Transformation module | Energy distribution module | Correlation module | Segmentation module |

FIG. 12

| 601 | 602 |
|---|---|
| Receiver | Processor |

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012146290 A1

- US 2006053003 A1